# EUROPEAN PATENT APPLICATION

(11) **EP 4 648 519 A2**
(43) Date of publication of application: **12.11.2025**
(21) Application number: 25196123.1
(22) Date of filing: 17.02.2024
(51) Int. Cl.: H04W 72/23

(54) **PHYSICAL DOWNLINK CONTROL CHANNEL (PDCCH) REPETITIONS FOR SYSTEM INFORMATION TRANSMISSIONS IN WIRELESS NETWORKS**

(62) Divisional of application: 24915865.0
(71) Applicant: Apple Inc., Cupertino, CA 95014 (US)
(72) Inventor: YE, Chunxuan, Cupertino, 95014 (US); YAO, Chunhai, Cupertino, 95014 (US); ZHANG, Dawei, Cupertino, 95014 (US); HE, Hong, Cupertino, 95014 (US); ZENG, Wei, Cupertino, 95014 (US); YANG, Weidong, Cupertino, 95014 (US)
(74) Representative: Bateman, Samuel Alec

(57) **Abstract**

Disclosed are methods, systems, and computer-readable medium to perform operations including: receiving, from a wireless network, a Physical Broadcast Channel (PBCH) include a first indication whether Physical Downlink Control Channel (PDCCH) repetitions are configured for System Information Block 1 (SIB1) signaling; receiving, from the wireless network, one or more PDCCHs based on the first indication, where the one or more PDCCHs include scheduling information for a Physical Downlink Shared Channel (PDSCH) carrying a SIB1; receiving, from the wireless network, the PDSCH carrying the SIB1 based on the scheduling information; and at least one of: configuring signaling for transmission to the wireless network according to the SIB1, or receiving signaling from the wireless network according to the SIB1.

## Description

### BACKGROUND

Wireless communication networks provide integrated communication platforms and telecommunication services to wireless user devices. Example telecommunication services include telephony, data (e.g., voice, audio, and/or video data), messaging, and/or other services. The wireless communication networks have wireless access nodes that exchange wireless signals with the wireless user devices using wireless network protocols, such as protocols described in various telecommunication standards promulgated by the Third Generation Partnership Project (3GPP). Example wireless communication networks include time division multiple access (TDMA) networks, frequency-division multiple access (FDMA) networks, orthogonal frequency-division multiple access (OFDMA) networks, Long Term Evolution (LTE), and Fifth Generation New Radio (5G NR). The wireless communication networks facilitate mobile broadband service using technologies such as OFDM, multiple input multiple output (MIMO), advanced channel coding, massive MIMO, beamforming, and/or other features.

### SUMMARY

In accordance with one aspect of the present disclosure, a method includes: receiving, from a wireless network, a Physical Broadcast Channel (PBCH) including a first indication whether Physical Downlink Control Channel (PDCCH) repetitions are configured for System Information Block 1 (SIB1) signaling; receiving, from the wireless network, one or more PDCCHs based on the first indication, where the one or more PDCCHs include scheduling information for a Physical Downlink Shared Channel (PDSCH) carrying a SIB1; receiving, from the wireless network, the PDSCH carrying the SIB1 based on the scheduling information; and at least one of: (i) configuring signaling for transmission to the wireless network according to the SIB1, or (ii) receiving signaling from the wireless network according to the SIB1.

Implementations of this aspect can include or more of the following features.

In some implementations, the scheduling information can include a second indication of a Control Resource Set (CORESET) of each of the one or more PDCCHs carrying the SIB1, and a third indication of a Search Space (SS) of each of the one or more PDCCHs carrying the SIB1.

In some implementations, the first indication can be signaled by a bit in a Master Information Block (MIB) of the PBCH.

In some implementations, the first indication can be signaled by a bit in a Physical Layer (PHY) payload of the PBCH.

In some implementations, the first indication can be signaled by two bits in a Physical Layer (PHY) payload of the PBCH, where the two bits additionally indicate a number of PDCCH repetitions for SIB1 signaling.

In some implementations, the two bits can additionally indicate at least one of: whether a common Control Resource Set (CORESET) is associated with the PDCCH repetitions, whether a common Space Search (SS) is associated with the PDCCH repetitions, or at least one of a time relationship or a frequency relationship between the PDCCH repetitions.

In some implementations, receiving the one or more PDCCHs can include: determining that the PBCH indicates that PDCCH repetitions are not configured for SIB1, and receiving a single PDCCH based on the first indication, where the single PDCCH carries the scheduling information for the PDSCH carrying the SIB1.

In some implementations, receiving the one or more PDCCHs can include: determining that the PBCH indicates that PDCCH repetitions are configured for SIB1, and receiving at least a first PDCCH and a second PDCCH based on the first indication, where each of the first PDCCH and the second PDCCH carries the scheduling information for the PDSCH carrying the SIB1.

In some implementations, the method can also include: determining that the first PDCCH and the second PDCCH have a common Control Resource Set (CORESET) and different respective Search Spaces, and determining an offset between the Search Spaces of the first PDCCH and the second PDCCH.

In some implementations, the offset can be a pre-determined offset.

In some implementations, the offset can be configured by the wireless network.

In some implementations, the method can also include: determining that the first PDCCH and the second PDCCH have a common Search Space and different respective Control Resource Sets (CORESETs), and determining an offset between the CORESETs of the first PDCCH and the second PDCCH.

In some implementations, the offset can be a pre-determined offset.

In some implementations, the offset can be configured by the wireless network.

In some implementations, the method can also include determining a PDSCH Quasi-Colocation (QCL) assumption at is at least one of the CORESETs of the first PDCCH and the second PDCCH.

In some implementations, the method can also include determining a PDSCH Quasi-Colocation (QCL) assumption by performing at least one of: determining a PDSCH QCL assumption that is the same as a higher frequency CORESET from among the CORESETs of the of the first PDCCH and the second PDCCH, or determining a PDSCH QCL assumption that is the same as a lower frequency CORESET from among the CORESETs of the of the first PDCCH and the second PDCCH.

In some implementations, the method can also include: determining that the first PDCCH and the second PDCCH have different respective Search Spaces and different respective Control Resource Sets (CORESETs), determining a first offset between the CORESETs of the first PDCCH and the second PDCCH, and determining a second offset between the Search Spaces of the first PDCCH and the second PDCCH.

In some implementations, the method can also include determining a PDSCH Quasi-Colocation (QCL) assumption based on at least one of the CORESETs of the first PDCCH and the second PDCCH.

In some implementations, the method can also include determining a PDSCH Quasi-Colocation (QCL) assumption by performing at least one: determining a PDSCH QCL assumption that is the same as a higher frequency CORESET from among the CORESETs of the of the first PDCCH and the second PDCCH, determining a PDSCH QCL assumption that is the same as a lower frequency CORESET from among the CORESETs of the of the first PDCCH and the second PDCCH, determining a PDSCH QCL assumption that is the same as a CORESET associated with the Search Space as an earlier Search Space from among the Search Spaces of the of the first PDCCH and the second PDCCH, or determining a PDSCH QCL assumption that is the same as a CORESET associated with the Search Space as a later Search Space from among the Search Spaces of the of the first PDCCH and the second PDCCH.

In some implementations, the method can also include receiving, from a wireless network, an additional indication whether PDCCH repetitions are configured for signaling at least one of: a SIB1 other than the SIB1, a Random Access Channel (RACH), or a paging message; and receiving, from the wireless network, one or more additional PDCCHs based on the additional indication, where the one or more additional PDCCHs include scheduling information for an additional PDSCH carrying at least one of: the SIB1 other than the SIB1, the RACH, or the paging message.

In some implementations, the additional indication can include explicit configuration of one or more additional Search Spaces of the one or more additional PDCCHs.

In some implementations, the one or more additional Search Spaces of the one or more additional PDCCHs can be implicitly configured.

In some implementations, the additional indication can be signaled by at least one of: the SIB1, a Master Information Block (MIB), or a PBCH Physical Layer (PHY) payload.

In some implementations, the method is performed by a user equipment (UE).

In some implementations, the method can be performed by one or more base band processors.

In another aspect, a method incudes: generating, for transmission to a user equipment (UE), a Physical Broadcast Channel (PBCH) including a first indication whether Physical Downlink Control Channel (PDCCH) repetitions are configured for System Information Block 1 (SIB1) signaling; generating, for transmission to the UE, one or more PDCCHs according to the first indication, where the one or more PDCCHs include scheduling information for a Physical Downlink Shared Channel (PDSCH) carrying a SIB1; generating, for transmission to the UE, the PDSCH carrying the SIB1 according on the scheduling information; and at least one of: configuring signaling for transmission to the UE according to the SIB1, or receiving signaling from the UE according to the SIB1.

Implementations of this aspect can include or more of the following features.

In some implementations, the scheduling information can include: a second indication of a Control Resource Set (CORESET) of each of the one or more PDCCHs carrying the SIB1, and a third indication of a Search Space (SS) of each of the one or more PDCCHs carrying the SIB1.

In some implementations, the first indication can be signaled by a bit in a Master Information Block (MIB) of the PBCH.

In some implementations, the first indication can be signaled by a bit in a Physical Layer (PHY) payload of the PBCH.

In some implementations, the first indication can be signaled by two bits in a Physical Layer (PHY) payload of the PBCH, where the two bits additionally indicate a number of PDCCH repetitions for SIB1 signaling.

In some implementations, the two bits can additionally indicate at least one of: whether a common Control Resource Set (CORESET) is associated with the PDCCH repetitions, whether a common Space Search (SS) is associated with the PDCCH repetitions, or at least one of a time relationship or a frequency relationship between the PDCCH repetitions.

In some implementations, the PBCH can indicate that PDCCH repetitions are not configured for SIB1. Generating the one or more PDCCHs for transmission can include generating a single PDCCH for transmission, where the single PDCCH carries the scheduling information for the PDSCH carrying the SIB1.

In some implementations, the PBCH can indicate that PDCCH repetitions are configured for SIB1. Generating the one or more PDCCHs for transmission can include generating at least a first PDCCH and a second PDCCH for transmission based on the first indication, where each of the first PDCCH and the second PDCCH carries the scheduling information for the PDSCH carrying the SIB1.

In some implementations, the first PDCCH and the second PDCCH can have a common Control Resource Set (CORESET) and different respective Search Spaces, and the method can further include configuring an offset between the Search Spaces of the first PDCCH and the second PDCCH.

In some implementations, the first PDCCH and the second PDCCH can have a common Search Space and different respective Control Resource Sets (CORESETs), and the method can further include configuring an offset between the CORESETs of the first PDCCH and the second PDCCH.

In some implementations, the first PDCCH and the second PDCCH can have different respective Search Spaces and different respective Control Resource Sets (CORESETs), and the method can further include at least one of: configuring a first offset between the CORESETs of the first PDCCH and the second PDCCH, or configuring a second offset between the Search Spaces of the first PDCCH and the second PDCCH.

In some implementations, the method can further include generating, for transmission to the UE, an additional indication whether PDCCH repetitions are configured for signaling at least one of: a SIB1 other than the SIB1, a Random Access Channel (RACH), or a paging message; and generating, for transmission to the UE, one or more additional PDCCHs according to the additional indication, where the one or more additional PDCCHs include scheduling information for an additional PDSCH carrying at least one of: the SIB1 other than the SIB1, the RACH, or the paging message.

In some implementations, the additional indication can include an explicit configuration of one or more additional Search Spaces of the one or more additional PDCCHs.

In some implementations, the one or more additional Search Spaces of the one or more additional PDCCHs can be implicitly configured.

In some implementations, the additional indication can be signaled by at least one of: the SIB1, a Master Information Block (MIB), or a PBCH Physical Layer (PHY) payload.

In some implementations, the method can be performed by a base station.

In some implementations, the method can be performed by one or more base band processors.

In another aspect, a system includes one or more computers and one or more storage devices, on which are stored instructions that are operable, when executed by the one or more computers, to cause the one or more computers to perform any of the methods or operations described herein.

In another aspect, a non-transitory computer storage medium is encoded with instructions that, when executed by one or more computers, cause the one or more computers to perform any of the methods or operations described herein.

In another aspect, an apparatus includes processing circuitry configured to perform any of the methods or operations described herein.

In another aspect, one or more baseband processors are configured to perform any of the methods or operations described herein.

The details of one or more embodiments of these systems and methods are set forth in the accompanying drawings and the description below. Other features, objects, and advantages of these systems and methods will be apparent from the description and drawings, and from the claims.

### BRIEF DESCRIPTION OF THE FIGURES

FIG. 1 illustrates a wireless network, according to some implementations.
FIG. 2 illustrates example Control Channel Elements (CCEs) for two Search Space Sets for linked pairs of Physical Downlink Control Channels (PDCCHs).
FIG. 3 shows an example process for transmitting system information, such as System Information Block 1 (SIB1) from a network to a user equipment (UE).
FIG. 4 shows an example of linked PDCCHs, according to one embodiment.
FIG. 5 shows an example of linked PDCCHs, according to another embodiment.
FIG. 6 shows an example of linked PDCCHs, according to another embodiment.
FIG. 7 shows an example process for transmitting other system information from a network to a user equipment (UE).
FIG. 8A illustrates a flowchart of an example method, according to some implementations.
FIG. 8B illustrates a flowchart of another example method, according to some implementations.
FIG. 9 illustrates an example UE, according to some implementations.
FIG. 10 illustrates an example access node, according to some implementations.

### DETAILED DESCRIPTION

In general, Physical Downlink Control Channels (PDCCHs) can be used to schedule system information transmissions in wireless networks, such as cellular networks on terrestrial networks (TNs) and/or on non-terrestrial networks (NTNs) (e.g., networks having one or more orbital satellites). As an example, a network (e.g., via a base station, gNodeB (gNB), etc.) can configure a user equipment (UE) to monitor for one or more PDCCHs that include scheduling information for transmitting system information (e.g., System Information Block 1, SIB1) carried in one or more Physical Downlink Shared Channels (PDSCHs). Based on the scheduling information, the UE monitors for the scheduled PDSCH(s), obtains the system information included therein, and exchanges data with the wireless network in accordance with the system information.

In some implementations, the wireless network and the UE can be configured to support the use of PDCCH repetitions for transmitting system information. This can be beneficial, for example, in improving the reliability of communications between the wireless network and the UE (e.g., to improve the reliability by which the UE obtains system information from the wireless network, compared to situations in which only a single PDCCH is used to provide scheduling information to a UE). For example, the wireless network can be configured to transmit multiple PDCCHs to a UE, where each of the PDCCHs includes a respective instance of scheduling information for a particular PDSCH that carries SIB1 and/or other system information. Based on the scheduling information, the UE can monitor for the scheduled PDSCH, and obtain the SIB 1 and/or other system information included therein.

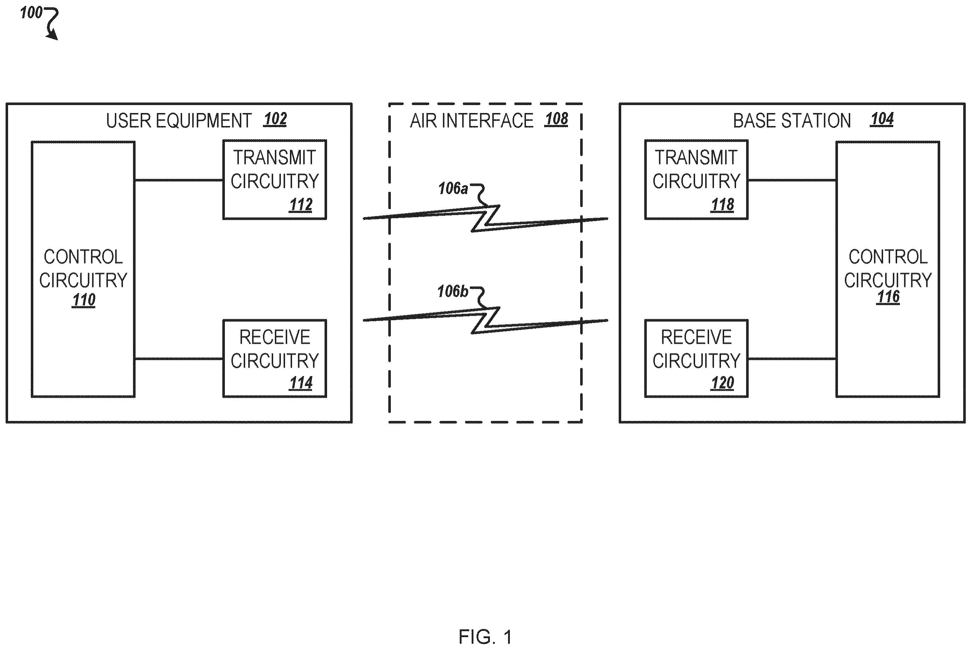

FIG. 1 illustrates a wireless network 100, according to some implementations. The wireless network 100 includes a UE 102 and a base station 104 connected via one or more channels 106A, 106B across an air interface 108. The UE 102 and base station 104 communicate using a system that supports controls for managing the access of the UE 102 to a network via the base station 104.

In some implementations, the wireless network 100 may be a Non-Standalone (NSA) network that incorporates Long Term Evolution (LTE) and Fifth Generation (5G) New Radio (NR) communication standards as defined by the Third Generation Partnership Project (3GPP) technical specifications. For example, the wireless network 100 may be a E-UTRA (Evolved Universal Terrestrial Radio Access)-NR Dual Connectivity (EN-DC) network, or an NR-EUTRA Dual Connectivity (NE-DC) network. In some other implementations, the wireless network 100 may be a Standalone (SA) network that incorporates only 5G NR. Furthermore, other types of communication standards are possible, including future 3GPP systems (e.g., Sixth Generation (6G)), Institute of Electrical and Electronics Engineers (IEEE) 802.11 technology (e.g., IEEE 802.11a; IEEE 802.11b; IEEE 802.11g; IEEE 802.11-2007; IEEE 802.11n; IEEE 802.11-2012; IEEE 802.11ac; or other present or future developed IEEE 802.11 technologies), IEEE 802.16 protocols (e.g., WMAN, WiMAX, etc.), or the like. While aspects may be described herein using terminology commonly associated with 5G NR, aspects of the present disclosure can be applied to other systems, such as 3G, 4G, and/or systems subsequent to 5G (e.g., 6G).

In the wireless network 100, the UE 102 and any other UE in the system may be, for example, any of laptop computers, smartphones, tablet computers, machine-type devices such as smart meters or specialized devices for healthcare, intelligent transportation systems, or any other wireless device. In network 100, the base station 104 provides the UE 102 network connectivity to a broader network (not shown). This UE 102 connectivity is provided via the air interface 108 in a base station service area provided by the base station 104. In some implementations, such a broader network may be a wide area network operated by a cellular network provider, or may be the Internet. Each base station service area associated with the base station 104 is supported by one or more antennas integrated with the base station 104. The service areas can be divided into a number of sectors associated with one or more particular antennas. Such sectors may be physically associated with one or more fixed antennas or may be assigned to a physical area with one or more tunable antennas or antenna settings adjustable in a beamforming process used to direct a signal to a particular sector.

The UE 102 includes control circuitry 110 coupled with transmit circuitry 112 and receive circuitry 114. The transmit circuitry 112 and receive circuitry 114 may each be coupled with one or more antennas. The control circuitry 110 may include various combinations of application-specific circuitry and baseband circuitry. The transmit circuitry 112 and receive circuitry 114 may be adapted to transmit and receive data, respectively, and may include radio frequency (RF) circuitry and/or front-end module (FEM) circuitry.

In various implementations, aspects of the transmit circuitry 112, receive circuitry 114, and control circuitry 110 may be integrated in various ways to implement the operations described herein. The control circuitry 110 may be adapted or configured to perform various operations, such as those described elsewhere in this disclosure related to a UE. For instance, the control circuitry 110 can be configured to obtain system information (e.g., SIB1 and/or other system information) using scheduling information received from a network by PDCCH repetition.

The transmit circuitry 112 can perform various operations described in this specification. Additionally, the transmit circuitry 112 may transmit using a plurality of multiplexed uplink physical channels. The plurality of uplink physical channels may be multiplexed, e.g., according to time division multiplexing (TDM) or frequency division multiplexing (FDM) along with carrier aggregation. The transmit circuitry 112 may be configured to receive block data from the control circuitry 110 for transmission across the air interface 108.

The receive circuitry 114 can perform various operations described in this specification. Additionally, the receive circuitry 114 may receive a plurality of multiplexed downlink physical channels from the air interface 108 and relay the physical channels to the control circuitry 110. The plurality of downlink physical channels may be multiplexed, e.g., according to TDM or FDM along with carrier aggregation. The transmit circuitry 112 and the receive circuitry 114 may transmit and receive, respectively, both control data and content data (e.g., messages, images, video, etc.) structured within data blocks that are carried by the physical channels.

FIG. 1 also illustrates the base station 104. In some implementations, the base station 104 may be a 5G radio access network (RAN), a next generation RAN, a E-UTRAN, a non-terrestrial cell, or a legacy RAN, such as a UTRAN. As used herein, the term "5G RAN" or the like may refer to the base station 104 that operates in an NR or 5G wireless network 100, and the term "E-UTRAN" or the like may refer to a base station 104 that operates in an LTE or 4G wireless network 100. The UE 102 utilizes connections (or channels) 106A, 106B, each of which includes a physical communications interface or layer.

The base station 104 circuitry may include control circuitry 116 coupled with transmit circuitry 118 and receive circuitry 120. The transmit circuitry 118 and receive circuitry 120 may each be coupled with one or more antennas that may be used to enable communications via the air interface 108. The transmit circuitry 118 and receive circuitry 120 may be adapted to transmit and receive data, respectively, to any UE connected to the base station 104. The receive circuitry 120 may receive a plurality of uplink physical channels from one or more UEs, including the UE 102.

In FIG. 1, the one or more channels 106A, 106B are illustrated as an air interface to enable communicative coupling, and can be consistent with cellular communications protocols, such as a UMTS protocol, a 3GPP LTE protocol, an Advanced long term evolution (LTE-A) protocol, a LTE-based access to unlicensed spectrum (LTE-U), a 5G protocol, a NR protocol, an NR-based access to unlicensed spectrum (NR-U) protocol, and/or any other communications protocol(s). In implementations, the UE 102 may directly exchange communication data via a ProSe interface. The ProSe interface may alternatively be referred to as a sidelink (SL) interface and may include one or more logical channels, including but not limited to a Physical Sidelink Control Channel (PSCCH), a Physical Sidelink Discovery Channel (PSDCH), and a Physical Sidelink Broadcast Channel (PSBCH).

In general, PDCCHs can be used to schedule system information transmissions in wireless networks, such as cellular networks on TNs and/or NTNs. As an example, referring to FIG. 1, the wireless network 100 (e.g., via the base station 104) can configure the UE 102 to monitor for one or more PDCCHs that include scheduling information for transmitting system information (e.g., SIB1) carried in one or more PDSCHs. Based on the scheduling information, the UE 102 monitors for the scheduled PDSCH(s), obtains the system information included therein, and exchanges data with the base station 104 in accordance with the system information.

In some implementations, the base station 104 and the UE 102 can be configured to support the use of PDCCH repetitions for transmitting system information. This can be beneficial, for example, in improving the reliability of communications between the base station 104 and the UE 102 (e.g., to improve the reliability by which the UE 102 obtains system information from the base station 104, compared to situations in which only a single PDCCH is used to provide scheduling information to the UE 102). This may be particularly beneficial in the context of NTNs, in which the base stations 104 (e.g., orbiting satellites) are power constrained and have limited transmission power capabilities (e.g., compared to a terrestrial base station).

For example, the base station 104 can be configured to transmit multiple PDCCHs to the UE 102, where each of the PDCCHs includes a respective instance of scheduling information for a particular PDSCH that carries SIB1 and/or other system information. Based on the scheduling information, the UE 102 can monitor for the scheduled PDSCH, and obtain the SIB1 and/or other system information included therein.

In general, PDCCHs provide scheduling information according to different types or formats, depending on the implementation.

As an example, a PDCCH can be a Type 0 PDCCH CSS (Common Search Space) Set (e.g., DCI format 1_0 with Cyclic Redundancy Check (CRC) scrambled by System Information Radio Network Temporary Identifier (SI-RNTI)). The Master Information Block (MIB) can include *pdech-ConfigSIB1* which includes *controlResourceSetZero* and *searchSpaceZero.* Further, the SIB1 can include *PDCCH-ConfigCommon,* which includes *searchSpaceSIB1* and *searchSpaceZero.*

As another example, a PDCCH can be a Type 0A PDCCH CSS Set (e.g., DCI format 1_0 with CRC scrambled by SI-RNTI. The SIB1 can include *PDCCH-ConfigCommon,* which includes *SearchSpaceOtherSystemInformation.*

Further, a pair of PDCCHs (e.g., two repeated PDCCHs) can be transmitted using Time Division Multiplexing (TDM) and/or Frequency Divisional Multiplexing (FDM) from two linked Search Space (SS) sets. The linkage of the two SS sets can be configured by the network, for example, by Radio Resource Control (RRC). Further, the two linked SS sets can be associated with the same or different Control Resource Sets (CORESETs). For example, a pair of PDCCHs can share the same SS set (e.g., transmitted at the same time) or have different respective SS sets (e.g., transmitted at different respective times). Further, the pair of PDCCHs can share the same CORESET (e.g., transmitted using the same frequency or frequencies) or have different respective CORESETs (e.g., transmitted using different respective frequencies).

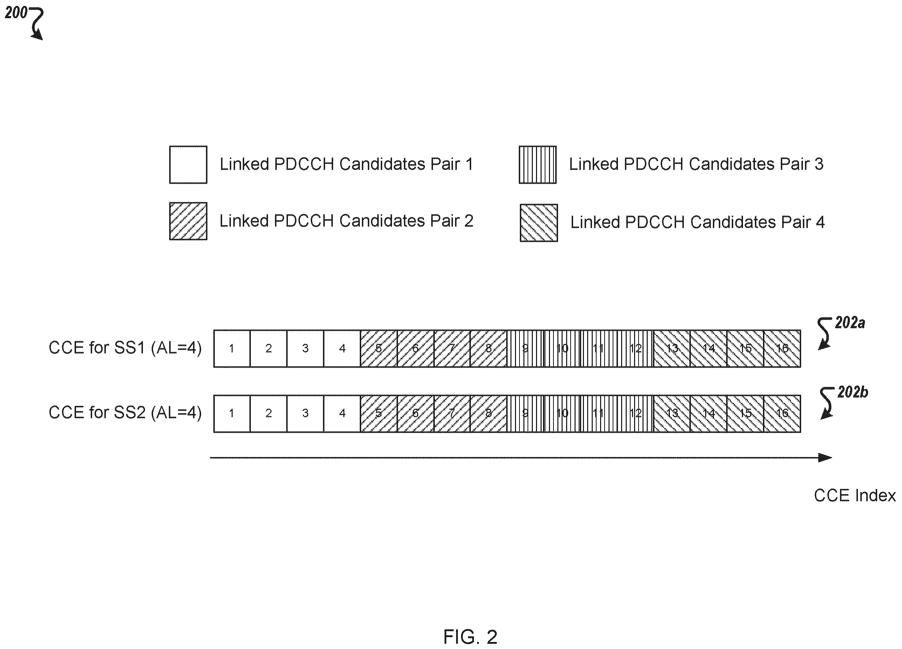

Further, a pair of PDCCH candidates in two SS sets have the same aggregation level (AL) and the same PDCCH candidate index. For example, FIG. 2 shows Control Channel Elements (CCEs) for two SS sets "SS1" (202a) and "SS2" (202b) each having an AL of 4. In this example, the CCEs include four different linked pairs of PDCCHs candidates (e.g., each PDCCH candidate spanning four respective CCEs).

As described above, the base station 104 and the UE 102 can be configured to support the use of PDCCH repetitions for transmitting system information.

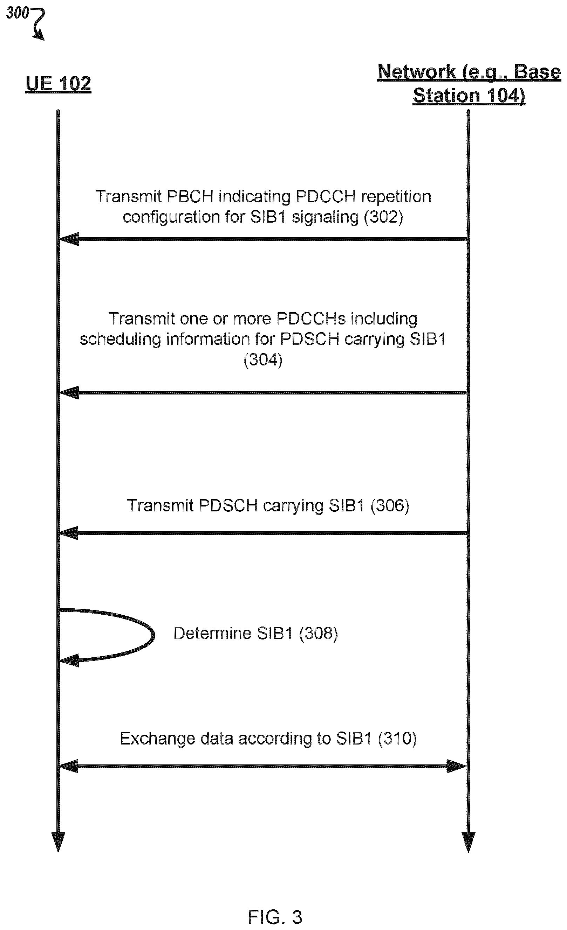

FIG. 3 shows an example process 300 for transmitting system information (e.g., SIB1) from a network (e.g., via a base station) to a UE. As an example, the process 300 can be performed, at least in part, using the base station 104 and the UE 102 described with reference to FIG. 1.

According to the process 300, the network (e.g., via the base station 102) transmits a Physical Broadcast Channel (PBCH) that indicates a PDCCH repetition configuration for SIB1 signaling (302). As an example, the PBCH can indicate whether PDCCH repetition is configured (e.g., whether multiple PDCCHs are scheduled for transmission to the UE 102, where each PDCCH includes scheduling information for a PDSCH carrying the SIB1). Further, if PDCCH repetition is configured, the PBCH can also indicate the number of configured PDCCH repetitions (e.g., two, four, eight, sixteen, or any other number of PDCCH repetitions). Further, if PDCCH repetition is configured, the PBCH can also indicate a time relationship and/or a frequency relationship between the PDCCH repetitions.

Further, the network (e.g., via the base station 102) transmits one or more PDCCHs to the UE 102 in accordance with the PDCCH repetition configuration (304). For example, if PDCCH repetition is configured, the base station 104 can transmit two or more PDCCHs to the UE 102, where each PDCCH includes a respective instance of the scheduling information for the PDSCH carrying the SIB1). As another example, if PDCCH repetition is not configured, the base station 104 can transmit a single PDCCH to the UE 102, where the PDCCH includes the scheduling information for the PDSCH carrying the SIB1. The UE 102 obtains the scheduling information from the PDCCH(s) and monitors for the transmission of the scheduled PDSCH.

The network (e.g., via the base station 102) transmits the PDSCH carrying the SIB1 to the UE 102, in accordance with the scheduling information (306). The UE 102 monitors for the scheduled PDSCH and determines the SIB1 carried in the scheduled PDSCH (308).

Further, the UE 102 and the network exchange data with one another in accordance with the SIB1 (310). As an example, the SIB1 can include information that allows the UE 102 to determine whether it is permitted to access a particular cell of the network. Further, the SIB1 can include scheduling information for other System Information Blocks (SIBs) and/or RRC information, such as times and/or constants, for transmitting data to and/or receiving data from the network. Based on the information included in the SIB1, the UE 102 can encode and transmit data to the network and/or receive and decode data from the network.

As described above, the network (e.g., via the base station 104) can signal, to the UE 102, a PDCCH repetition configuration for SIB1 signaling. Various signaling techniques can be used.

For example, in a legacy system, a MIB (e.g., transmitted to the UE 102 in a PBCH) may be configured to include a "spare" bit that is not used for any signaling. Example syntax for a legacy MIB is shown below:

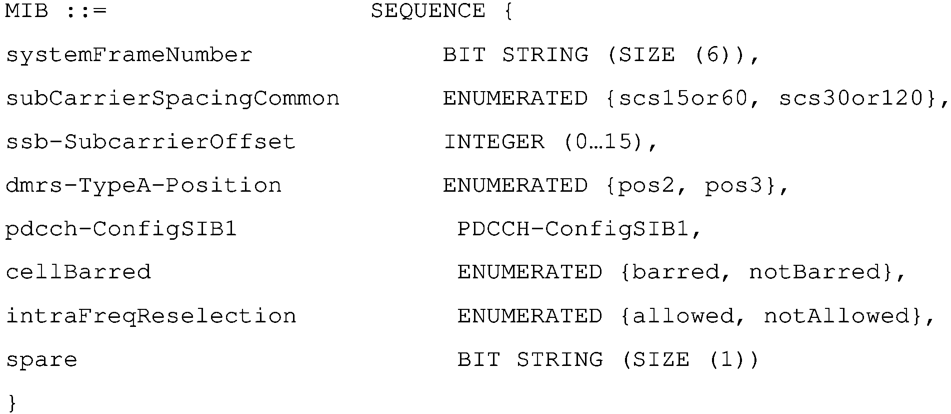

This spare bit can be used to indicate whether PDCCH repetition is configured for SIB 1 transmissions. For example, a value of 0 can signal or imply that PDCCH repetition is not configured, whereas a value of 1 can signal or imply that PDCCH repetition is configured. Further, a legacy UE can assume that PDCCH repetitions are not configured (e.g., as the legacy UE can be configured to refrain from reading the spare bit in the MIB).

As another example, a Physical Layer (PHY) payload of the PBCH can be used to signal a PDCCH repetition configuration.

For instance, in a legacy FR1-NTN system, the PHY payload of the PBCH may be configured to include "reserved" bits *a̅*_{*A̅*+6} and *d̅*_{*A̅*+7} that are not used for any signaling, where *a̅ᵢ̅* is the ith bit in a PBCH payload and A̅ is the payload size of a transport block delivered to layer 1.

In some implementations, only one of these reserved bits can be used to indicate a PDCCH repetition configuration. For example, *a̅*_{*A̅*+6} = 0 can indicate that PDCCH repetition for SIB 1 transmission is not configured, whereas *a̅*_{*A̅*+6} = 1 can indicate that PDCCH repetition for SIB 1 transmission is configured. In this example, the bit *a̅*_{*A̅*+7} can be retained as a reserved bit.

In some implementations, both of these reserved bits can be used to indicate a PDCCH repetition configuration. For instance, (*a̅*_{*A̅*+6}, *a̅*_{*A̅*+7}) can be used to indicate a PDCCH repetition number. As an example, (0,0) can indicate a repetition number of 1 (no repetition), (0,1) can indicate a PDCCH repetition number of 2, (1,0) can indicate repetition number of 4, and (1,1) can indicate a repetition number of 8.

In some implementations, (*a̅*_{*A̅*+6}, *a̅*_{*A̅*+7}) can be used to indicate a CORESET and Search Space associated with the PDCCHs (e.g., CORESET #0 and Search Space #0). As an example, (0,0) can indicate no PDCCH repetition. Further, (0,1) can indicate two CORESETs #0 (e.g., CORESET #0 and CORESET #0A) are configured with a pre-defined frequency gap between them and a common SS set. Further, (1,0) can indicates a single CORESET #0 is configured with two linked SS sets (e.g., SS #0 and SS #0A). Further, (1,1) can indicate two CORESETs #0 (e.g., CORESET #0 and CORESET #0A) are configured with separate SS sets.

As another example, (0,0) can indicate no PDCCH repetition. Further, (0,1) can indicate a single CORESET #0 with two linked search space sets with gap of 1 slot. Further, (1,0) can indicate a single CORESET #0 with two linked SS sets with gap of 3 symbols in the same slot.

In some implementations, both the spare bit in the MIB and the PHY payload of the PBCH can be used to indicate a PDCCH repetition configuration for SIB1 signaling.

As described above, a pair of linked PDCCHs (e.g., two PDCCH repetitions including the same scheduling information for an PDSCH carrying a SIB1) can share the same SS set (e.g., transmitted at the same time) or have different respective SS sets (e.g., transmitted at different respective times). Further, the pair of linked PDCCHs can share the same CORESET (e.g., transmitted using the same frequency or frequencies) or have different respective CORESETs (e.g., transmitted using different respective frequencies).

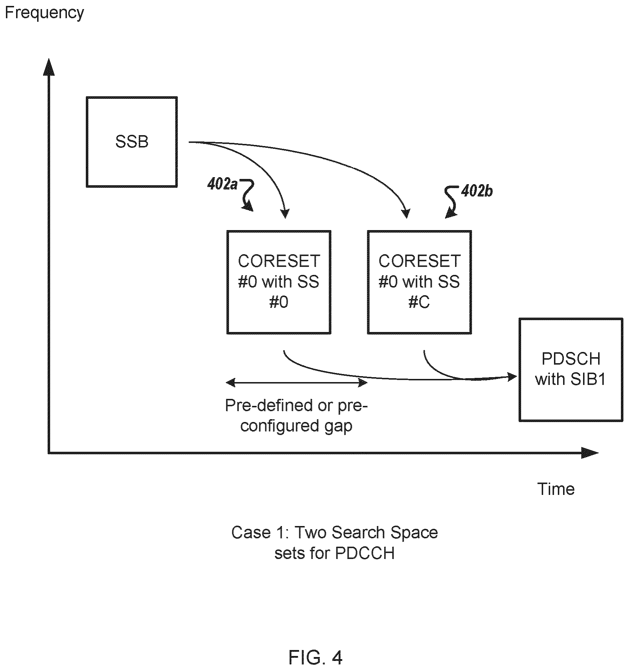

As an example, FIG. 4 shows a first case in which a pair of linked PDCCHs have the same CORESET (e.g., CORESET #0), but have different respective SS sets (e.g., SS #0 and SS #0C). This is referred to as the PDCCHs having a common CORESET with two linked SS sets. In this example, the two linked SS sets have the same PDCCH monitoring periodicity, but have different respective PDCCH monitoring offsets (e.g., in two consecutive slots or in consecutive symbols of the same slot).

In some implementations, the first SS set (e.g., SS #0) can could follow an existing pre-configuration and indication via the MIB (e.g., *MIB*/*pdcch-ConfigSIB1*/*searchSpaceZero*).

Further, the second SS set (e.g., SS #0C) can have most of the same settings as the first SS set (e.g., SS #0). However, different settings can be used for PDCCH monitoring timing (e.g., offset value in the parameter *monitoringSlotPeriodicityAndOffset* and/or the parameter *monitoringSymbols withSlot*)*.*

In some implementations, the time relationship of the two SS sets can be pre-defined and fixed. For example, the SS sets can be separated by a predetermined number of slots (e.g., one). As another example, the SS sets can be separated within the same slot by a predetermined number of symbols (e.g., three).

In some implementations, several options for the time relationship can be pre-configured, and one of the options can be selected based on a PBCH indication (e.g., using a multiple-bit indication, as described above).

In some implementations, the first SS set (e.g., SS #0) can occur before the second SS set (e.g., SS #0C). In some implementations, the first SS set (e.g., SS #0) can occur after the second SS set (e.g., SS #0C).

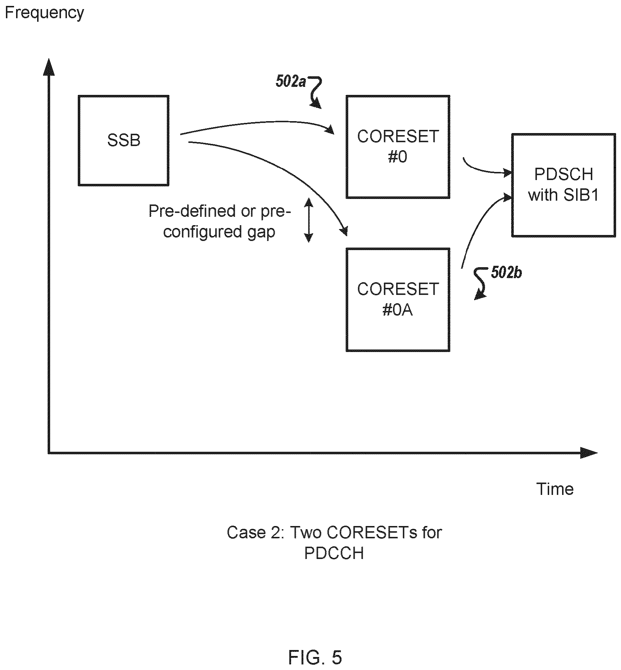

As another example, FIG. 5 shows a second case in which a pair of linked PDCCHs 502a and 502b have the different respective FDM-separated CORESETs (e.g., CORESET #0 and CORESET #0A), but have the same SS set (e.g., SS #0). This is referred to as the PDCCHs having two linked CORESETs and a common SS set. In this example, the two linked CORESETs have the same settings with respect to Demodulation Reference Signal (DMRS) scrambling sequence initialization, the number of consecutive symbols, the number of resource blocks (RBs), CCE-to-Research Element Group (REG) mapping, Transmission Configuration Indicator (TCI) state, *tci-PresentInDCI,* etc. Further, the first CORESET (e.g., CORESET #0) can follow an existing pre-configuration and indication via the MIB (e.g., *MIB*/*pdcch-ConfigSIB1*/*controlResourceSetZero*).

In some implementations, the second CORESET (e.g., CORESET #0A) can have most of the same settings as the first CORESET (e.g., CORESET #0). However, different sets of RBs can be used for each.

In some implementations, the frequency location relationship of the two CORESETs can be pre-determined and fixed. For example, the CORESETs can be separated from one another by a pre-determined number of RBs (e.g., one RB).

In some implementations, several options for the frequency relationship can be pre-configured, and one of the options can be selected based on a PBCH indication (e.g., using a multiple-bit indication, as described above).

In general, each CORESET can be configured to a configured TCI state (e.g., a particular beam direction). In some implementations, if the Download Control Information (DCI) does not explicitly indicate a PDSCH TCI state, then it can be assumed that the PDSCH beam (TCI state) is the same as the CORESET beam (TCI state). In this case, PDSCH can be assumed to be QCL-ed with PDCCH in CORESET. In some implementations, if the TCI field is not present in the Downlink Control Information (DCI), and the scheduling offset is equal to or larger than *timeDurationForQCL,* a PDSCH Quasi Colocation (QCL) assumption can be determined based on the first CORESET (e.g., CORESET #0), the second CORESET (e.g., CORESET #0A), and/or the PDSCH candidate at a lower (or higher) frequency.

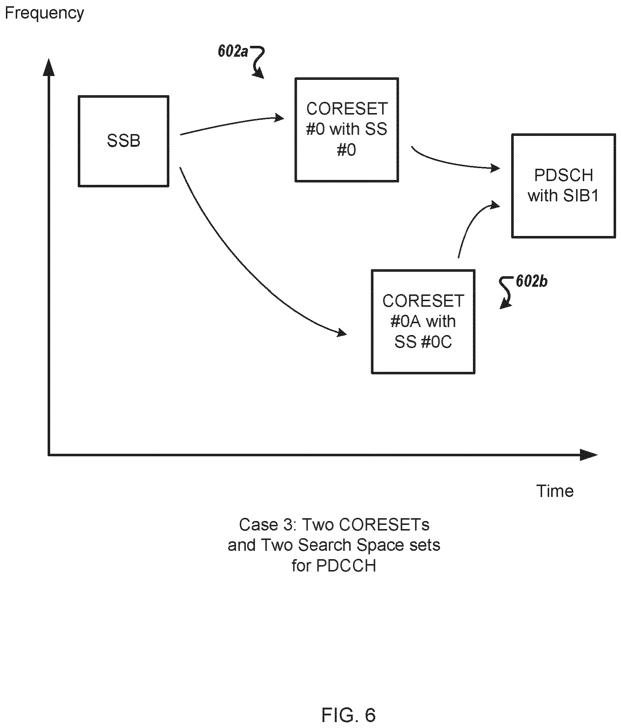

As another example, FIG. 6 shows a third case in which a pair of linked PDCCHs 602a and 602b have the different respective CORESETs (e.g., CORESET #0 and CORESET #0A), and different respective SS sets (e.g., SS #0 and SS #0C). This is referred to as the PDCCHs having two linked CORESETs and two linked SS sets. Here the first SS set (e.g., SS #0) is associated with the first CORESET (e.g., CORESET #0), and the second SS set (e.g., SS #0C) is associated with the second CORESET (e.g., CORESET #0A).

The first CORESET (e.g., CORESET #0) and the second SS set (e.g., SS #0) can follow existing pre-configurations and indications via the MIB (e.g., *MIB*/*pdcch-ConfigSIB1*/*searchSpaceZero* and *MIB*/*pdcch-ConfigSIB1*/*controlResourceSetZero,* respectively).

The configuration of the second CORESET (e.g., CORESET #0A) can be determined according to the second case described with reference to FIG. 5. Further, the configuration of the first SS set (e.g., SS #0C) can be determined according to the first use case described with reference to FIG. 4.

Further, the DCI 1_0 field of Time Domain Resource Assignment (TDRA) can be interpreted differently, depending on the implementation.

For example, in some implementations, the indicated K0 value can be determined based on the later SS set so that sufficient processing time is available.

As another example, multiple copies of PDSCHs carrying SIB1 can be transmitted (e.g., one PDSCH for legacy Ues, and one for Ues configured for repeated PDCCH reception).

As another example, the two SS sets can always be configured in the same slot.

In some implementations, if the TCI field is not present in the Downlink Control Information (DCI), and the scheduling offset is equal to or larger than *timeDurationForQCL,* a PDSCH Quasi Colocation (QCL) assumption can be determined based on the first CORESET (e.g., CORESET #0), the second CORESET (e.g., CORESET #0A), the PDSCH candidate at a lower (or higher) frequency, and/or the PDSCH candidate having a later (or earlier) monitoring occasion.

In some implementations, PDCCH repetition also can be used to signal scheduling information for PDSCHs carrying additional information beyond SIB1. For example, PDCCH repetition also can be used to signal scheduling information for PDSCHs carrying other SIBs, Random Access Channels (RACHs), and/or paging messages.

In some implementations, the SIB1 can be used to explicitly configure additional search spaces for other SIBs, RACH and Paging PDCCHs (e.g., via *SIB1*/*PDCCH-ConfigCommon*). For instance, the total number of common search spaces can be extended from 4 to 8. As an example:

```
 PDCCH-ConfigCommon ::= SEQUENCE {
 commonSearchSpaceList SEQUENCE (SIZE (1..8)) OF SearchSpace
```

Further, *searchSpaceOtherSystemInformation, pagingSearchSpace,* and *ra-SearchSpace* can have a list of *searchSpaceId* (e.g., a list of two), where the two corresponding search spaces have the same *searchspacelinkingId* value.

Further, *searchSpaceSIB1* also can have a list of *searchSpaceId* (e.g., a list of two), where the two corresponding search spaces have the same *searchspacelinkingId* value.

In some implementations, additional search spaces for other SIBs, RACH and Paging PDCCHs can be implicitly configured.

For example, the relation of the additional search spaces with the search spaces configured in *PDCCH-ConfigCommon* can be pre-defined or pre-configured (e.g., the starting symbol location in *monitoringSymbolsWithinSlot* of the additional search space can be predefined or pre-configured).

Further, the indication of using PDCCH repetition for SIB1, other SIBs, RA and Paging can be indicated in SIB1, MIB, and/or the PHY payload of the PBCH (e.g., as described above).

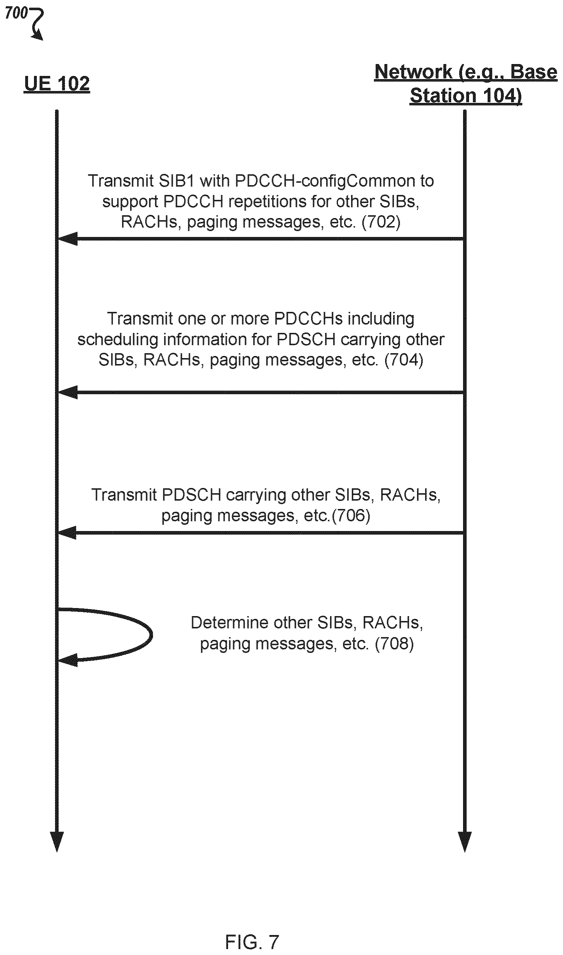

For instance, FIG. 7 shows an example process 700 for transmitting additional system information (e.g., other SIBs, RACHs, paging messages, etc.) from a network (e.g., via a base station) to a UE. As an example, the process 700 can be performed, at least in part, using the base station 104 and the UE 102 described with reference to FIG. 1, either instead of or in addition to the process 300 described with reference to FIG. 3.

According to the process 700, the network (e.g., via the base station 102) transmits a SIB1 with *PDCCH-configCommon* to support PDCCH repetitions for other SIBs, RACHs, paging messages, etc. (702). As an example, the SIB1 can be obtained using the process 300 (e.g., by obtaining the SIB1 from a PDSCH scheduled by one or more PDCCHs).

Further, the network (e.g., via the base station 102) transmits one or more PDCCHs to the UE 102 in accordance with the SIB1 (704). For example, if PDCCH repetition for other types of system information is configured, the base station 104 can transmit two or more PDCCHs to the UE 102, where each PDCCH includes a respective instance of the scheduling information for the PDSCH carrying the other system information. As another example, if PDCCH repetition is not configured, the base station 104 can transmit a single PDCCH to the UE 102, where the PDCCH includes the scheduling information for the PDSCH carrying the other system information. The UE 102 obtains the scheduling information from the PDCCH(s) and monitors for the transmission of the scheduled PDSCH.

The network (e.g., via the base station 102) transmits the PDSCH carrying the other system information (e.g., other SIBs, RACHs, paging messages, etc.) to the UE 102, in accordance with the scheduling information (706). The UE 102 monitors for the scheduled PDSCH and determines the other system information carried in the scheduled PDSCH (708).

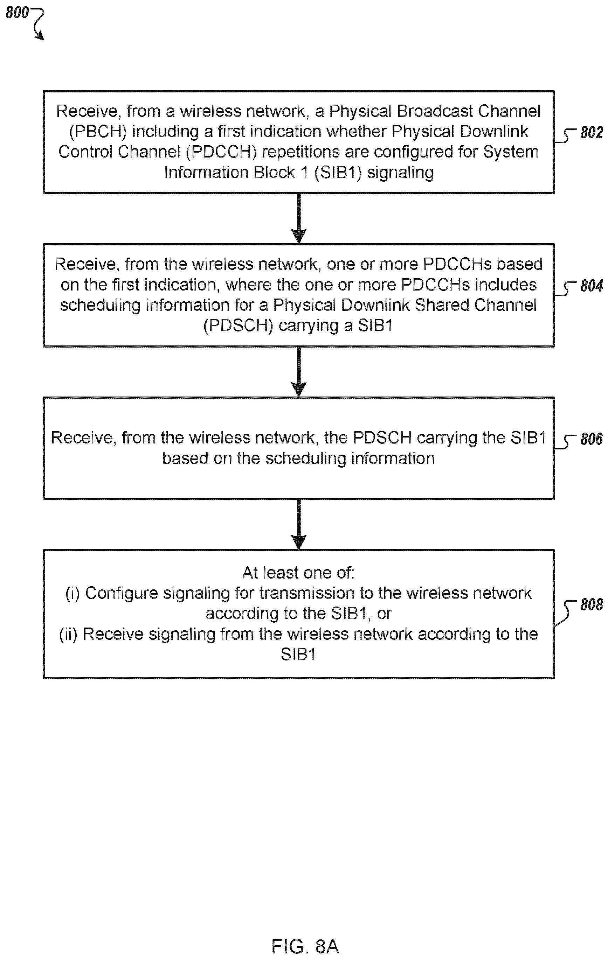

FIG. 8A illustrates a flowchart of an example method 800, according to some implementations. For clarity of presentation, the description that follows generally describes method 800 in the context of the other figures in this description. For example, method 800 can be performed by the UE 102 of FIG. 1. It will be understood that method 800 can be performed, for example, by any suitable system, environment, software, hardware, or a combination of systems, environments, software, and hardware, as appropriate. In some implementations, various steps of method 800 can be run in parallel, in combination, in loops, or in any order.

According to the method 800, a system receives, from a wireless network, a Physical Broadcast Channel (PBCH) including a first indication whether Physical Downlink Control Channel (PDCCH) repetitions are configured for System Information Block 1 (SIB1) signaling; (802).

In some implementations, the first indication can be signaled by a bit in a Master Information Block (MIB) of the PBCH.

In some implementations, the first indication can be signaled by a bit in a Physical Layer (PHY) payload of the PBCH.

In some implementations, the first indication can be signaled by two bits in a Physical Layer (PHY) payload of the PBCH. Further, the two bits additionally indicate a number of PDCCH repetitions for SIB1 signaling.

In some implementations, the two bits can additionally indicate at least one of: whether a common Control Resource Set (CORESET) is associated with the PDCCH repetitions, whether a common Space Search (SS) is associated with the PDCCH repetitions, or at least one of a time relationship or a frequency relationship between the PDCCH repetitions.

The system receives, from the wireless network, one or more PDCCHs based on the first indication (804). The one or more PDCCHs include scheduling information for a Physical Downlink Shared Channel (PDSCH) carrying a SIB1.

In some implementations, the scheduling information can include a second indication of a Control Resource Set (CORESET) of each of the one or more PDCCHs carrying the SIB1. Further, the scheduling information can include a third indication of a Search Space (SS) of each of the one or more PDCCHs carrying the SIB1.

In some implementations, receiving the one or more PDCCHs can include determining that the PBCH indicates that PDCCH repetitions are not configured for SIB1, and receiving a single PDCCH based on the first indication. The single PDCCH can carry the scheduling information for the PDSCH carrying the SIB1.

In some implementations, receiving the one or more PDCCHs can include determining that the PBCH indicates that PDCCH repetitions are configured for SIB1, and receiving at least a first PDCCH and a second PDCCH based on the first indication. Each of the first PDCCH and the second PDCCH can carry the scheduling information for the PDSCH carrying the SIB1

The system receives, from the wireless network, the PDSCH carrying the SIB1 based on the scheduling information (806).

The system performs at least one (i) configuring signaling for transmission to the wireless network according to the SIB1, or (ii) receiving signaling from the wireless network according to the SIB1 (808).

In some implementations, the method 800 can also include determining that the first PDCCH and the second PDCCH have a common Control Resource Set (CORESET) and different respective Search Spaces, and determining an offset between the Search Spaces of the first PDCCH and the second PDCCH. In some implementations, the offset can be a pre-determined offset. In some implementations, the offset can be configured by the wireless network.

In some implementations, the method 800 can also include determining that the first PDCCH and the second PDCCH have a common Search Space and different respective Control Resource Sets (CORESETs), and determining an offset between the CORESETs of the first PDCCH and the second PDCCH. In some implementations, the offset can be a pre-determined offset. In some implementations, the offset can be configured by the wireless network.

In some implementations, the method 800 can also include determining a PDSCH Quasi-Colocation (QCL) assumption at is at least one of the CORESETs of the first PDCCH and the second PDCCH.

In some implementations, the method 800 can also include determining a PDSCH Quasi-Colocation (QCL) assumption by performing at least one of: determining a PDSCH QCL assumption that is the same as a higher frequency CORESET from among the CORESETs of the of the first PDCCH and the second PDCCH, or determining a PDSCH QCL assumption that is the same as a lower frequency CORESET from among the CORESETs of the of the first PDCCH and the second PDCCH.

In some implementations, the method 800 can also include: determining that the first PDCCH and the second PDCCH have different respective Search Spaces and different respective Control Resource Sets (CORESETs), determining a first offset between the CORESETs of the first PDCCH and the second PDCCH, and determining a second offset between the Search Spaces of the first PDCCH and the second PDCCH.

In some implementations, the method 800 can also include determining a PDSCH Quasi-Colocation (QCL) assumption based on at least one of the CORESETs of the first PDCCH and the second PDCCH.

In some implementations, the method 800 can also include determining a PDSCH Quasi-Colocation (QCL) assumption by performing at least one: determining a PDSCH QCL assumption that is the same as a higher frequency CORESET from among the CORESETs of the of the first PDCCH and the second PDCCH, determining a PDSCH QCL assumption that is the same as a lower frequency CORESET from among the CORESETs of the of the first PDCCH and the second PDCCH, determining a PDSCH QCL assumption that is the same as a CORESET associated with the Search Space as an earlier Search Space from among the Search Spaces of the of the first PDCCH and the second PDCCH, or determining a PDSCH QCL assumption that is the same as a CORESET associated with the Search Space as a later Search Space from among the Search Spaces of the of the first PDCCH and the second PDCCH.

In some implementations, the method 800 can also include receiving, from a wireless network, an additional indication whether PDCCH repetitions are configured for signaling at least one of: a SIB1 other than the SIB1, a Random Access Channel (RACH), or a paging message; and receiving, from the wireless network, one or more additional PDCCHs based on the additional indication. The one or more additional PDCCHs can include scheduling information for an additional PDSCH carrying at least one of: the SIB1 other than the SIB1, the RACH, or the paging message.

In some implementations, the additional indication can include explicit configuration of one or more additional Search Spaces of the one or more additional PDCCHs.

In some implementations, the one or more additional Search Spaces of the one or more additional PDCCHs can be implicitly configured.

In some implementations, the additional indication can be signaled by at least one of: the SIB1, a Master Information Block (MIB), or a PBCH Physical Layer (PHY) payload.

In some implementations, the method 800 can be performed, at least in part, by a user equipment (UE).

In some implementations, the method can be performed, at least in part, by one or more base band processors.

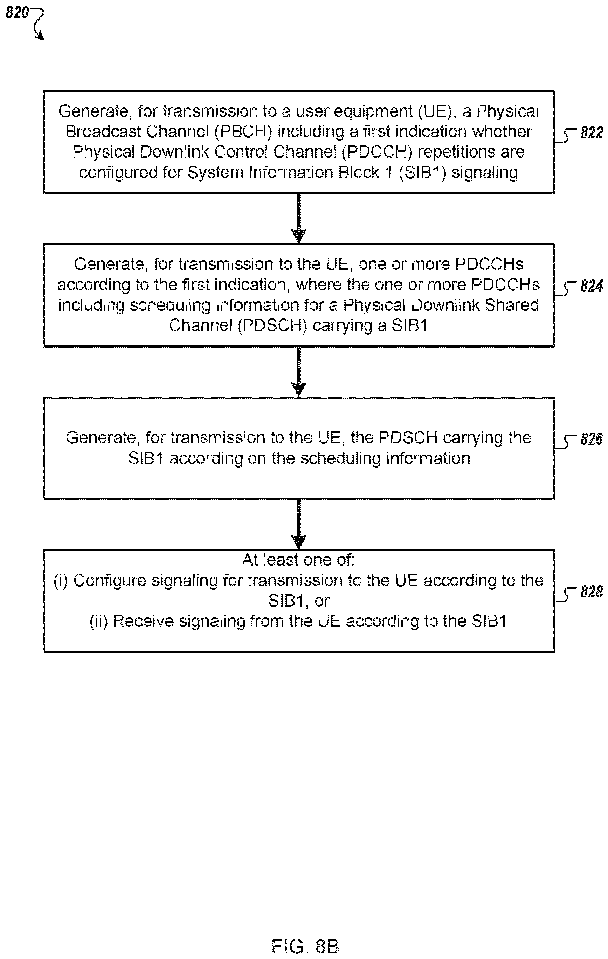

FIG. 8B illustrates a flowchart of an example method 820, according to some implementations. For clarity of presentation, the description that follows generally describes method 820 in the context of the other figures in this description. For example, method 820 can be performed by the base station 104 of FIG. 1. It will be understood that method 820 can be performed, for example, by any suitable system, environment, software, hardware, or a combination of systems, environments, software, and hardware, as appropriate. In some implementations, various steps of method 800 can be run in parallel, in combination, in loops, or in any order.

According to the method 820, a system generates, for transmission to a user equipment (UE), a Physical Broadcast Channel (PBCH) including a first indication whether Physical Downlink Control Channel (PDCCH) repetitions are configured for System Information Block 1 (SIB1) signaling (822).

In some implementations, the first indication can be signaled by a bit in a Master Information Block (MIB) of the PBCH.

In some implementations, the first indication can be signaled by a bit in a Physical Layer (PHY) payload of the PBCH.

In some implementations, the first indication can be signaled by two bits in a Physical Layer (PHY) payload of the PBCH. The two bits can additionally indicate a number of PDCCH repetitions for SIB1 signaling.

In some implementations, the two bits can additionally indicate at least one of: whether a common Control Resource Set (CORESET) is associated with the PDCCH repetitions, whether a common Space Search (SS) is associated with the PDCCH repetitions, or at least one of a time relationship or a frequency relationship between the PDCCH repetitions.

The system generates for transmission to the UE, one or more PDCCHs according to the first indication (824). The one or more PDCCHs include scheduling information for a Physical Downlink Shared Channel (PDSCH) carrying a SIB1 (824).

In some implementations, the scheduling information can include a second indication of a Control Resource Set (CORESET) of each of the one or more PDCCHs carrying the SIB1. Further, the scheduling information can include a third indication of a Search Space (SS) of each of the one or more PDCCHs carrying the SIB1.

In some implementations, the PBCH can indicate that PDCCH repetitions are not configured for SIB1. Generating the one or more PDCCHs for transmission can include generating a single PDCCH for transmission, where the single PDCCH carries the scheduling information for the PDSCH carrying the SIB1.

In some implementations, the PBCH can indicate that PDCCH repetitions are configured for SIB1. Generating the one or more PDCCHs for transmission can include generating at least a first PDCCH and a second PDCCH for transmission based on the first indication, where each of the first PDCCH and the second PDCCH carries the scheduling information for the PDSCH carrying the SIB1.

The system generates, for transmission to the UE, the PDSCH carrying the SIB1 according on the scheduling information (826).

The system performs and at least one of: (i) configuring signaling for transmission to the UE according to the SIB1, or (ii) receiving signaling from the UE according to the SIB1 (828).

In some implementations, the first PDCCH and the second PDCCH can have a common Control Resource Set (CORESET) and different respective Search Spaces. Further, the sytsem can configure an offset between the Search Spaces of the first PDCCH and the second PDCCH.

In some implementations, the first PDCCH and the second PDCCH can have a common Search Space and different respective Control Resource Sets (CORESETs). Further, the system can configure an offset between the CORESETs of the first PDCCH and the second PDCCH.

In some implementations, the first PDCCH and the second PDCCH can have different respective Search Spaces and different respective Control Resource Sets (CORESETs). Further, the system can perform at least one of: (ii) configuring a first offset between the CORESETs of the first PDCCH and the second PDCCH, or (ii) configuring a second offset between the Search Spaces of the first PDCCH and the second PDCCH.

In some implementations, the method 820 can further include generating, for transmission to the UE, an additional indication whether PDCCH repetitions are configured for signaling at least one of: a SIB1 other than the SIB1, a Random Access Channel (RACH), or a paging message. Further, the method 820 can include generating, for transmission to the UE, one or more additional PDCCHs according to the additional indication. The one or more additional PDCCHs can include scheduling information for an additional PDSCH carrying at least one of: the SIB1 other than the SIB1, the RACH, or the paging message.

In some implementations, the additional indication can include an explicit configuration of one or more additional Search Spaces of the one or more additional PDCCHs.

In some implementations, the one or more additional Search Spaces of the one or more additional PDCCHs can be implicitly configured.

In some implementations, the additional indication can be signaled by at least one of: the SIB1, a Master Information Block (MIB), or a PBCH Physical Layer (PHY) payload.

In some implementations, the method 820 can be performed, at least in part, by a base station.

In some implementations, the method 820 can be performed, at least in part ,by one or more base band processors.

The example methods 800 and 820 shown in FIGS. 8A and 8B can be modified or reconfigured to include additional, fewer, or different steps (not shown in FIGS. 8A and 8B), which can be performed in the order shown or in a different order.

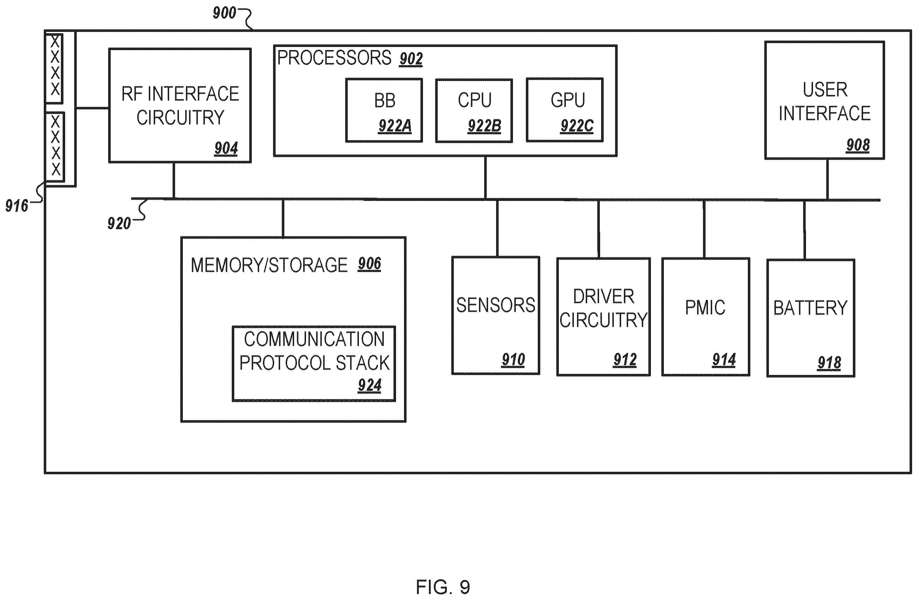

FIG. 9 illustrates an example UE 900, according to some implementations. The UE 900 may be similar to and substantially interchangeable with UE 102 of FIG. 1.

The UE 900 may be any mobile or non-mobile computing device, such as, for example, mobile phones, computers, tablets, industrial wireless sensors (for example, microphones, pressure sensors, thermometers, motion sensors, accelerometers, inventory sensors, electric voltage/current meters, etc.), video devices (for example, cameras, video cameras, etc.), wearable devices (for example, a smart watch), relaxed-IoT devices.

The UE 900 may include processors 902, RF interface circuitry 904, memory/storage 906, user interface 908, sensors 910, driver circuitry 912, power management integrated circuit (PMIC) 914, one or more antenna(s) 916, and battery 918. The components of the UE 900 may be implemented as integrated circuits (ICs), portions thereof, discrete electronic devices, or other modules, logic, hardware, software, firmware, or a combination thereof. The block diagram of FIG. 9 is intended to show a high-level view of some of the components of the UE 900. However, some of the components shown may be omitted, additional components may be present, and different arrangement of the components shown may occur in other implementations.

The components of the UE 900 may be coupled with various other components over one or more interconnects 920, which may represent any type of interface, input/output, bus (local, system, or expansion), transmission line, trace, optical connection, etc., that allows various circuit components (on common or different chips or chipsets) to interact with one another.

The processors 902 may include processor circuitry such as, for example, baseband processor circuitry (BB) 922A, central processor unit circuitry (CPU) 922B, and graphics processor unit circuitry (GPU) 922C. The processors 902 may include any type of circuitry or processor circuitry that executes or otherwise operates computer-executable instructions, such as program code, software modules, or functional processes from memory/storage 906 to cause the UE 900 to perform operations as described herein.

In some implementations, the baseband processor circuitry 922A may access a communication protocol stack 924 in the memory/storage 906 to communicate over a 3GPP compatible network. In general, the baseband processor circuitry 922A may access the communication protocol stack to: perform user plane functions at a physical (PHY) layer, medium access control (MAC) layer, radio link control (RLC) layer, packet data convergence protocol (PDCP) layer, service data adaptation protocol (SDAP) layer, and PDU layer; and perform control plane functions at a PHY layer, MAC layer, RLC layer, PDCP layer, RRC layer, and a non-access stratum layer. In some implementations, the PHY layer operations may additionally/alternatively be performed by the components of the RF interface circuitry 904. The baseband processor circuitry 922A may generate or process baseband signals or waveforms that carry information in 3GPP-compatible networks. In some implementations, the waveforms for NR may be based cyclic prefix orthogonal frequency division multiplexing (OFDM) "CP-OFDM" in the uplink or downlink, and discrete Fourier transform spread OFDM "DFT-S-OFDM" in the uplink.

The memory/storage 906 may include one or more non-transitory, computer-readable media that includes instructions (for example, communication protocol stack 924) that may be executed by one or more of the processors 902 to cause the UE 900 to perform various operations described herein. The memory/storage 906 include any type of volatile or non-volatile memory that may be distributed throughout the UE 900. In some implementations, some of the memory/storage 906 may be located on the processors 902 themselves (for example, L1 and L2 cache), while other memory/storage 906 is external to the processors 902 but accessible thereto via a memory interface. The memory/storage 906 may include any suitable volatile or non-volatile memory such as, but not limited to, dynamic random access memory (DRAM), static random access memory (SRAM), erasable programmable read only memory (EPROM), electrically erasable programmable read only memory (EEPROM), Flash memory, solid-state memory, or any other type of memory device technology.

The RF interface circuitry 904 may include transceiver circuitry and radio frequency front module (RFEM) that allows the UE 900 to communicate with other devices over a radio access network. The RF interface circuitry 904 may include various elements arranged in transmit or receive paths. These elements may include, for example, switches, mixers, amplifiers, filters, synthesizer circuitry, control circuitry, etc.

In the receive path, the RFEM may receive a radiated signal from an air interface via antenna(s) 916 and proceed to filter and amplify (with a low-noise amplifier) the signal. The signal may be provided to a receiver of the transceiver that downconverts the RF signal into a baseband signal that is provided to the baseband processor of the processors 902.

In the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna(s) 916. In various implementations, the RF interface circuitry 904 may be configured to transmit/receive signals in a manner compatible with NR access technologies.

The antenna(s) 916 may include one or more antenna elements to convert electrical signals into radio waves to travel through the air and to convert received radio waves into electrical signals. The antenna elements may be arranged into one or more antenna panels. The antenna(s) 916 may have antenna panels that are omnidirectional, directional, or a combination thereof to enable beamforming and multiple input, multiple output communications. The antenna(s) 916 may include microstrip antennas, printed antennas fabricated on the surface of one or more printed circuit boards, patch antennas, phased array antennas, etc. The antenna(s) 916 may have one or more panels designed for specific frequency bands including bands in FR1 or FR2.

The user interface 908 includes various input/output (I/O) devices designed to enable user interaction with the UE 900. The user interface 908 includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators such as light emitting diodes "LEDs" and multi-character visual outputs), or more complex outputs such as display devices or touchscreens (for example, liquid crystal displays "LCDs," LED displays, quantum dot displays, projectors, etc.), with the output of characters, graphics, multimedia objects, and the like being generated or produced from the operation of the UE 900.

The sensors 910 may include devices, modules, or subsystems whose purpose is to detect events or changes in its environment and send the information (sensor data) about the detected events to some other device, module, subsystem, etc. Examples of such sensors include, inter alia, inertia measurement units including accelerometers, gyroscopes, or magnetometers; microelectromechanical systems or nanoelectromechanical systems including 3-axis accelerometers, 3-axis gyroscopes, or magnetometers; level sensors; temperature sensors (for example, thermistors); pressure sensors; image capture devices (for example, cameras or lensless apertures); light detection and ranging sensors; proximity sensors (for example, infrared radiation detector and the like); depth sensors; ambient light sensors; ultrasonic transceivers; microphones or other like audio capture devices; etc.

The driver circuitry 912 may include software and hardware elements that operate to control particular devices that are embedded in the UE 900, attached to the UE 900, or otherwise communicatively coupled with the UE 900. The driver circuitry 912 may include individual drivers allowing other components to interact with or control various input/output (I/O) devices that may be present within, or connected to, the UE 900. For example, driver circuitry 912 may include a display driver to control and allow access to a display device, a touchscreen driver to control and allow access to a touchscreen interface, sensor drivers to obtain sensor readings of sensors 910 and control and allow access to sensors 910, drivers to obtain actuator positions of electro-mechanic components or control and allow access to the electro-mechanic components, a camera driver to control and allow access to an embedded image capture device, audio drivers to control and allow access to one or more audio devices.

The PMIC 914 may manage power provided to various components of the UE 900. In particular, with respect to the processors 902, the PMIC 914 may control power-source selection, voltage scaling, battery charging, or DC-to-DC conversion.

In some implementations, the PMIC 914 may control, or otherwise be part of, various power saving mechanisms of the UE 900. A battery 918 may power the UE 900, although in some examples the UE 900 may be mounted deployed in a fixed location and may have a power supply coupled to an electrical grid. The battery 918 may be a lithium-ion battery, a metal-air battery, such as a zinc-air battery, an aluminum-air battery, a lithium-air battery, and the like. In some implementations, such as in vehicle-based applications, the battery 918 may be a typical lead-acid automotive battery.

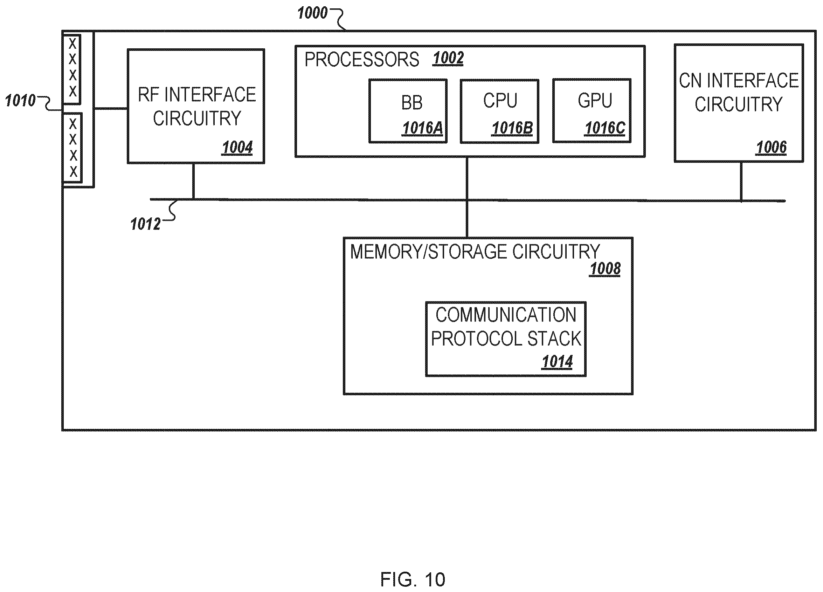

FIG. 10 illustrates an example access node 1000 (e.g., a base station or gNB), according to some implementations. The access node 1000 may be similar to and substantially interchangeable with base station 104. The access node 1000 may include processors 1002, RF interface circuitry 1004, core network (CN) interface circuitry 1006, memory/storage circuitry 1008, and one or more antenna(s) 1010.

The components of the access node 1000 may be coupled with various other components over one or more interconnects 1012. The processors 1002, RF interface circuitry 1004, memory/storage circuitry 1008 (including communication protocol stack 1014), antenna(s) 1010, and interconnects 1012 may be similar to like-named elements shown and described with respect to FIG. 10. For example, the processors 1002 may include processor circuitry such as, for example, baseband processor circuitry (BB) 1016A, central processor unit circuitry (CPU) 1016B, and graphics processor unit circuitry (GPU) 1016C.

The CN interface circuitry 1006 may provide connectivity to a core network, for example, a 5^{th} Generation Core network (5GC) using a 5GC-compatible network interface protocol such as carrier Ethernet protocols, or some other suitable protocol. Network connectivity may be provided to/from the access node 1000 via a fiber optic or wireless backhaul. The CN interface circuitry 1006 may include one or more dedicated processors or FPGAs to communicate using one or more of the aforementioned protocols. In some implementations, the CN interface circuitry 1006 may include multiple controllers to provide connectivity to other networks using the same or different protocols.

As used herein, the terms "access node," "access point," or the like may describe equipment that provides the radio baseband functions for data and/or voice connectivity between a network and one or more users. These access nodes can be referred to as BS, gNBs, RAN nodes, eNBs, NodeBs, RSUs, TRxPs or TRPs, and so forth, and can include ground stations (e.g., terrestrial access points) or satellite stations providing coverage within a geographic area (e.g., a cell). As used herein, the term "NG RAN node" or the like may refer to an access node 1000 that operates in an NR or 5G system (for example, a gNB), and the term "E-UTRAN node" or the like may refer to an access node 1000 that operates in an LTE or 4G system (e.g., an eNB). According to various implementations, the access node 1000 may be implemented as one or more of a dedicated physical device such as a macrocell base station, and/or a low power (LP) base station for providing femtocells, picocells or other like cells having smaller coverage areas, smaller user capacity, or higher bandwidth compared to macrocells.

In some implementations, all or parts of the access node 1000 may be implemented as one or more software entities running on server computers as part of a virtual network, which may be referred to as a CRAN and/or a virtual baseband unit pool (vBBUP). In V2X scenarios, the access node 1000 may be or act as a "Road Side Unit." The term "Road Side Unit" or "RSU" may refer to any transportation infrastructure entity used for V2X communications. An RSU may be implemented in or by a suitable RAN node or a stationary (or relatively stationary) UE, where an RSU implemented in or by a UE may be referred to as a "UE-type RSU," an RSU implemented in or by an eNB may be referred to as an "eNB-type RSU," an RSU implemented in or by a gNB may be referred to as a "gNB-type RSU," and the like.

Various components may be described as performing a task or tasks, for convenience in the description. Such descriptions should be interpreted as including the phrase "configured to." Reciting a component that is configured to perform one or more tasks is expressly intended not to invoke 35 U.S.C. § 112(f) interpretation for that component.

For one or more embodiments, at least one of the components set forth in one or more of the preceding figures may be configured to perform one or more operations, techniques, processes, or methods as set forth in the example section below. For example, the baseband circuitry as described above in connection with one or more of the preceding figures may be configured to operate in accordance with one or more of the examples set forth below. For another example, circuitry associated with a UE, base station, network element, etc., as described above in connection with one or more of the preceding figures may be configured to operate in accordance with one or more of the examples set forth below in the example section.

### Examples

In the following sections, further exemplary embodiments are provided.

Example A1 includes a method comprising: receiving, from a wireless network, a Physical Broadcast Channel (PBCH) comprising a first indication whether Physical Downlink Control Channel (PDCCH) repetitions are configured for System Information Block 1 (SIB1) signaling; receiving, from the wireless network, one or more PDCCHs based on the first indication, wherein the one or more PDCCHs comprise scheduling information for a Physical Downlink Shared Channel (PDSCH) carrying a SIB1; receiving, from the wireless network, the PDSCH carrying the SIB1 based on the scheduling information; and at least one of: configuring signaling for transmission to the wireless network according to the SIB1, or receiving signaling from the wireless network according to the SIB1.

Example A2 includes the method of Example A1. Further, the scheduling information comprises: a second indication of a Control Resource Set (CORESET) of each of the one or more PDCCHs carrying the SIB1, and a third indication of a Search Space (SS) of each of the one or more PDCCHs carrying the SIB1.

Example A3 includes the method of Examples A1 or A2. Further, the first indication is signaled by a bit in a Master Information Block (MIB) of the PBCH.

Example A4 includes the method of any of Examples A1-A3. Further, the first indication is signaled by a bit in a Physical Layer (PHY) payload of the PBCH.

Example A5 includes the method of any of Examples A1-A4. Further, the first indication is signaled by two bits in a Physical Layer (PHY) payload of the PBCH, wherein the two bits additionally indicate a number of PDCCH repetitions for SIB1 signaling.

Example A6 includes the method of any of Examples A1-A5. Further, the two bits additionally indicate at least one of: whether a common Control Resource Set (CORESET) is associated with the PDCCH repetitions, whether a common Space Search (SS) is associated with the PDCCH repetitions, or at least one of a time relationship or a frequency relationship between the PDCCH repetitions.

Example A7 includes the method of any of Examples A1-A6. Further, receiving the one or more PDCCHs comprises: determining that the PBCH indicates that PDCCH repetitions are not configured for SIB1, and receiving a single PDCCH based on the first indication, wherein the single PDCCH carries the scheduling information for the PDSCH carrying the SIB1.

Example A8 includes the method of any of Examples A1-A7. Further, receiving the one or more PDCCHs comprises: determining that the PBCH indicates that PDCCH repetitions are configured for SIB1, and receiving at least a first PDCCH and a second PDCCH based on the first indication, wherein each of the first PDCCH and the second PDCCH carries the scheduling information for the PDSCH carrying the SIB1.

Example A9 includes the method of any of Examples A1-A8. Further, the method comprises: determining that the first PDCCH and the second PDCCH have a common Control Resource Set (CORESET) and different respective Search Spaces, and determining an offset between the Search Spaces of the first PDCCH and the second PDCCH.

Example A10 includes the method of any of Examples A1-A9. Further, the offset is a pre-determined offset.

Example A11 includes the method of any of Examples A1-A10. Further, the offset is configured by the wireless network.

Example A12 includes the method of any of Examples A1-A11. Further, the method includes determining that the first PDCCH and the second PDCCH have a common Search Space and different respective Control Resource Sets (CORESETs), and determining an offset between the CORESETs of the first PDCCH and the second PDCCH.

Example A13 includes the method of any of Examples A1-A12. Further, the offset is a pre-determined offset.

Example A14 includes the method of Example A13. Further, the offset is configured by the wireless network.

Example A15 includes the method of any of Examples A1-A14. Further, the method incudes determining a PDSCH Quasi-Colocation (QCL) assumption that is at least one of the CORESETs of the first PDCCH and the second PDCCH.

Example A16 includes the method of any of Examples A1-A15. Further, the method includes determining a PDSCH Quasi-Colocation (QCL) assumption by performing at least one of: determining a PDSCH QCL assumption that is the same as a higher frequency CORESET from among the CORESETs of the of the first PDCCH and the second PDCCH, or determining a PDSCH QCL assumption that is the same as a lower frequency CORESET from among the CORESETs of the of the first PDCCH and the second PDCCH.

Example A17 includes the method of any of Examples A1-A16. Further, the method includes determining that the first PDCCH and the second PDCCH have different respective Search Spaces and different respective Control Resource Sets (CORESETs), determining a first offset between the CORESETs of the first PDCCH and the second PDCCH, and determining a second offset between the Search Spaces of the first PDCCH and the second PDCCH.

Example A18 includes the method of any of Examples A1-A17. Further, the method includes determining a PDSCH Quasi-Colocation (QCL) assumption based on at least one of the CORESETs of the first PDCCH and the second PDCCH.

Example A19 includes the method of any of Examples A1-A18. Further, the method includes determining a PDSCH Quasi-Colocation (QCL) assumption by performing at least one: determining a PDSCH QCL assumption that is the same as a higher frequency CORESET from among the CORESETs of the of the first PDCCH and the second PDCCH, determining a PDSCH QCL assumption that is the same as a lower frequency CORESET from among the CORESETs of the of the first PDCCH and the second PDCCH, determining a PDSCH QCL assumption that is the same as a CORESET associated with the Search Space as an earlier Search Space from among the Search Spaces of the of the first PDCCH and the second PDCCH, or determining a PDSCH QCL assumption that is the same as a CORESET associated with the Search Space as a later Search Space from among the Search Spaces of the of the first PDCCH and the second PDCCH.

Example A20 includes the method of any of Examples A1-A19. Further, the method includes receiving, from a wireless network, an additional indication whether PDCCH repetitions are configured for signaling at least one of: a SIB1 other than the SIB1, a Random Access Channel (RACH), or a paging message, and receiving, from the wireless network, one or more additional PDCCHs based on the additional indication, wherein the one or more additional PDCCHs comprises scheduling information for an additional PDSCH carrying at least one of: the SIB1 other than the SIB1, the RACH, or the paging message.

Example A21 includes the method of any of Examples A1-A20. Further, the additional indication comprises an explicit configuration of one or more additional Search Spaces of the one or more additional PDCCHs.

Example A22 includes the method of any of Examples A1-A21. Further, the one or more additional Search Spaces of the one or more additional PDCCHs are implicitly configured.

Example A23 includes the method of any of Examples A1-A22. Further, the additional indication is signaled by at least one of: the SIB1, a Master Information Block (MIB), or a PBCH Physical Layer (PHY) payload.

Example A24 includes the method of any of Examples A1-A23. Further, the method is performed by a user equipment (UE).

Example A25 includes the method of Examples A1-A23. Further, the method is performed by one or more base band processors.

Example B1 includes a method comprising: generating, for transmission to a user equipment (UE), a Physical Broadcast Channel (PBCH) comprising a first indication whether Physical Downlink Control Channel (PDCCH) repetitions are configured for System Information Block 1 (SIB1) signaling; generating, for transmission to the UE, one or more PDCCHs according to the first indication, wherein the one or more PDCCHs comprise scheduling information for a Physical Downlink Shared Channel (PDSCH) carrying a SIB1; generating, for transmission to the UE, the PDSCH carrying the SIB1 according on the scheduling information; and at least one of: configuring signaling for transmission to the UE according to the SIB1, or receiving signaling from the UE according to the SIB1.

Example B2 includes the method of Example B1. Further, the scheduling information comprises: a second indication of a Control Resource Set (CORESET) of each of the one or more PDCCHs carrying the SIB1, and a third indication of a Search Space (SS) of each of the one or more PDCCHs carrying the SIB1.

Example B3 includes the method of Examples B1 or B2. Further, the first indication is signaled by a bit in a Master Information Block (MIB) of the PBCH.

Example B4 includes the method of any of Examples B1-B3. Further, the first indication is signaled by a bit in a Physical Layer (PHY) payload of the PBCH.

Example B5 includes the method of any of Examples B1-B4. Further, the first indication is signaled by two bits in a Physical Layer (PHY) payload of the PBCH, wherein the two bits additionally indicate a number of PDCCH repetitions for SIB1 signaling.

Example B6 includes the method of any of Examples B1-B5. Further, the two bits additionally indicate at least one of: whether a common Control Resource Set (CORESET) is associated with the PDCCH repetitions, whether a common Space Search (SS) is associated with the PDCCH repetitions, or at least one or a time relationship or a frequency relationship between the PDCCH repetitions.

Example B7 includes the method of any of Examples B1-B6. Further, the PBCH indicates that PDCCH repetitions are not configured for SIB1, and wherein generating the one or more PDCCHs for transmission comprises generating a single PDCCH for transmission, wherein the single PDCCH carries the scheduling information for the PDSCH carrying the SIB1.

Example B8 includes the method of any of Examples B1-B7. Further, the PBCH indicates that PDCCH repetitions are configured for SIB1, and wherein generating the one or more PDCCHs for transmission comprises generating a first PDCCH and a second PDCCH for transmission based on the first indication, wherein each of the first PDCCH and the second PDCCH carries the scheduling information for the PDSCH carrying the SIB1.

Example B9 includes the method of any of Examples B1-B8. Further, the first PDCCH and the second PDCCH have a common Control Resource Set (CORESET) and different respective Search Spaces, and wherein the method further comprises configuring an offset between the Search Spaces of the first PDCCH and the second PDCCH.

Example B10 includes the method of any of Examples B1-B9. Further, the first PDCCH and the second PDCCH have a common Search Space and different respective Control Resource Sets (CORESETs), wherein the method further comprises configuring an offset between the CORESETs of the first PDCCH and the second PDCCH.

Example B11 includes the method of any of Examples B1-B10. Further, the first PDCCH and the second PDCCH have different respective Search Spaces and different respective Control Resource Sets (CORESETs), and wherein the method further comprises at least one of: configuring a first offset between the CORESETs of the first PDCCH and the second PDCCH, or configuring a second offset between the Search Spaces of the first PDCCH and the second PDCCH.

Example B12 includes the method of any of Examples B1-B11. Further, method includes: generating, for transmission to the UE, an additional indication whether PDCCH repetitions are configured for signaling at least one of: a SIB1 other than the SIB1, a Random Access Channel (RACH), or a paging message, and generating, for transmission to the UE, one or more additional PDCCHs according to the additional indication, wherein the one or more additional PDCCHs comprises scheduling information for an additional PDSCH carrying at least one of: the SIB1 other than the SIB1, the RACH, or the paging message.

Example B13 includes the method of any of Examples B1-B12. Further, the additional indication comprises an explicit configuration of one or more additional Search Spaces of the one or more additional PDCCHs.

Example B14 includes the method of any of Examples B1-B13. Further, the one or more additional Search Spaces of the one or more additional PDCCHs are implicitly configured.

Example B15 includes the method of any of Examples B1-B14. Further, the additional indication is signaled by at least one of: the SIB1, a Master Information Block (MIB), or a PBCH Physical Layer (PHY) payload.

Example B16 includes the method of any of Examples B1-B15. Further, the method is performed by a base station.

Example B17 includes the method of any of Examples B1-B15. Further, the method is performed by one or more base band processors.

Example C1 may include one or more non-transitory computer-readable media including instructions to cause an electronic device, upon execution of the instructions by one or more processors of the electronic device, to perform one or more elements of a method described in or related to any of any of Examples A1-A23 or B1-B15, or any other method or process described herein.

Example D1 may include an apparatus including logic, modules, and/or circuitry (e.g., processing circuitry) to perform one or more elements of a method described in or related to any of Examples A1-A23 or B1-B15, or any other method or process described herein.

Example E1 may include a method, technique, or process as described in or related to any of Examples A1-A23 or B1-B15, or portions or parts thereof.

Example F1 may include an apparatus including: one or more processors and one or more computer-readable media including instructions that, when executed by the one or more processors, cause the one or more processors to perform the method, techniques, or process as described in or related to any of Examples A1-A23 or B1-B15, or portions thereof.

Example G1 may include a signal as described in or related to any of Examples A1-A23 or B 1-B 15, or portions or parts thereof.

Example H1 may include a computer program including instructions, wherein execution of the program by a processing element is to cause the processing element to carry out the method, techniques, or process as described in or related to any of Examples A1-A23, or portions thereof. The operations or actions performed by the instructions executed by the processing element can include the methods of any one of Examples A1-A23 or B1-B15.

Example I1 may include a method of communicating in a wireless network as shown and described herein.

Example J1 may include a system for providing wireless communication as shown and described herein. The operations or actions performed by the system can include the methods of any one of Examples A1-A23 or B1-B15.

Example K1 may include a device for providing wireless communication as shown and described herein. The operations or actions performed by the device can include the methods of any one of Examples A1-A23 or B1-B15.

The previously described Examples A1-A23 or B1-B15 are implementable using a computer-implemented method; a non-transitory, computer-readable medium storing computer-readable instructions to perform the computer-implemented method; and a computer system including a computer memory interoperably coupled with a hardware processor configured to perform the computer-implemented method or the instructions stored on the non-transitory, computer-readable medium.

A system, e.g., a base station, an apparatus including one or more baseband processors, and so forth, can be configured to perform particular operations or actions by virtue of having software, firmware, hardware, or a combination of them installed on the system that in operation causes or cause the system to perform the actions. The operations or actions performed either by the system can include the methods of any one of Examples A1-A23 or B1-B15.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Although the embodiments above have been described in considerable detail, numerous variations and modifications will become apparent to those skilled in the art once the above disclosure is fully appreciated. It is intended that the following claims be interpreted to embrace all such variations and modifications.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.
The following clauses provide further understanding of the present disclosure:
1. A method comprising:
   receiving, from a wireless network, a Physical Broadcast Channel (PBCH) comprising a first indication whether Physical Downlink Control Channel (PDCCH) repetitions are configured for System Information Block 1 (SIB1) signaling;
   receiving, from the wireless network, one or more PDCCHs based on the first indication, wherein the one or more PDCCHs comprise scheduling information for a Physical Downlink Shared Channel (PDSCH) carrying a SIB1;
   receiving, from the wireless network, the PDSCH carrying the SIB1 based on the scheduling information; and
   at least one of:
      configuring signaling for transmission to the wireless network according to the SIB1, or
      receiving signaling from the wireless network according to the SIB1.
2. The method of clause 1, wherein the scheduling information comprises:
   a second indication of a Control Resource Set (CORESET) of each of the one or more PDCCHs carrying the SIB1, and
   a third indication of a Search Space (SS) of each of the one or more PDCCHs carrying the SIB1.
3. The method of clause 1, wherein the first indication is signaled by a bit in a Master Information Block (MIB) of the PBCH.
4. The method of clause 1, wherein the first indication is signaled by a bit in a Physical Layer (PHY) payload of the PBCH.
5. The method of clause 1, wherein the first indication is signaled by two bits in a Physical Layer (PHY) payload of the PBCH, wherein the two bits additionally indicate a number of PDCCH repetitions for SIB1 signaling.
6. The method of clause 5, wherein the two bits additionally indicate at least one of:
   whether a common Control Resource Set (CORESET) is associated with the PDCCH repetitions,
   whether a common Space Search (SS) is associated with the PDCCH repetitions, or
   at least one of a time relationship or a frequency relationship between the PDCCH repetitions.
7. The method of clause 1, wherein receiving the one or more PDCCHs comprises:
   determining that the PBCH indicates that PDCCH repetitions are not configured for SIB1, and
   receiving a single PDCCH based on the first indication, wherein the single PDCCH carries the scheduling information for the PDSCH carrying the SIB1.
8. The method of clause 1, wherein receiving the one or more PDCCHs comprises:
   determining that the PBCH indicates that PDCCH repetitions are configured for SIB1, and
   receiving at least a first PDCCH and a second PDCCH based on the first indication, wherein each of the first PDCCH and the second PDCCH carries the scheduling information for the PDSCH carrying the SIB1.
9. The method of clause 8, further comprising:
   determining that the first PDCCH and the second PDCCH have a common Control Resource Set (CORESET) and different respective Search Spaces, and
   determining an offset between the Search Spaces of the first PDCCH and the second PDCCH.
10. The method of clause 9, wherein the offset is a pre-determined offset.
11. The method of clause 9, wherein the offset is configured by the wireless network.
12. The method of clause 8, further comprising:
   determining that the first PDCCH and the second PDCCH have a common Search Space and different respective Control Resource Sets (CORESETs), and
   determining an offset between the CORESETs of the first PDCCH and the second PDCCH.
13. The method of clause 12, wherein the offset is a pre-determined offset.
14. The method of clause 12, wherein the offset is configured by the wireless network.
15. The method of clause 12, further comprising determining a PDSCH Quasi-Colocation (QCL) assumption that is at least one of the CORESETs of the first PDCCH and the second PDCCH.
16. The method of clause 12, further comprising determining a PDSCH Quasi-Colocation (QCL) assumption by performing at least one of:
   determining a PDSCH QCL assumption that is the same as a higher frequency CORESET from among the CORESETs of the of the first PDCCH and the second PDCCH, or
   determining a PDSCH QCL assumption that is the same as a lower frequency CORESET from among the CORESETs of the of the first PDCCH and the second PDCCH.
17. The method of clause 8, further comprising:
   determining that the first PDCCH and the second PDCCH have different respective Search Spaces and different respective Control Resource Sets (CORESETs),
   determining a first offset between the CORESETs of the first PDCCH and the second PDCCH, and
   determining a second offset between the Search Spaces of the first PDCCH and the second PDCCH.
18. The method of clause 17, further comprising determining a PDSCH Quasi-Colocation (QCL) assumption based on at least one of the CORESETs of the first PDCCH and the second PDCCH.
19. The method of clause 17, further comprising determining a PDSCH Quasi-Colocation (QCL) assumption by performing at least one:
   determining a PDSCH QCL assumption that is the same as a higher frequency CORESET from among the CORESETs of the of the first PDCCH and the second PDCCH,
   determining a PDSCH QCL assumption that is the same as a lower frequency CORESET from among the CORESETs of the of the first PDCCH and the second PDCCH,
   determining a PDSCH QCL assumption that is the same as a CORESET associated with the Search Space as an earlier Search Space from among the Search Spaces of the of the first PDCCH and the second PDCCH, or
   determining a PDSCH QCL assumption that is the same as a CORESET associated with the Search Space as a later Search Space from among the Search Spaces of the of the first PDCCH and the second PDCCH.
20. The method of clause 1, further comprising:
   receiving, from a wireless network, an additional indication whether PDCCH repetitions are configured for signaling at least one of:
      a SIB1 other than the SIB1,
      a Random Access Channel (RACH), or
      a paging message, and
   receiving, from the wireless network, one or more additional PDCCHs based on the additional indication, wherein the one or more additional PDCCHs comprises scheduling information for an additional PDSCH carrying at least one of:
      the SIB1 other than the SIB1,
      the RACH, or
      the paging message.
21. The method of clause 20, wherein the additional indication comprises an explicit configuration of one or more additional Search Spaces of the one or more additional PDCCHs.
22. The method of clause 20, wherein the one or more additional Search Spaces of the one or more additional PDCCHs are implicitly configured.
23. The method of clause 20, wherein the additional indication is signaled by at least one of:
   the SIB1,
   a Master Information Block (MIB), or
   a PBCH Physical Layer (PHY) payload.
24. The method of clause 1, wherein the method is performed by a user equipment (UE).
25. The method of clause 1, wherein the method is performed by one or more base band processors.
26. A system comprising one or more computers and one or more storage devices, on which are stored instructions that are operable, when executed by the one or more computers, to cause the one or more computers to perform the method of any of clauses 1-23.
27. A non-transitory computer storage medium encoded with instructions that, when executed by one or more computers, cause the one or more computers to perform the method of any of clauses 1-23.
28. An apparatus comprising processing circuitry configured to perform the method of any of clauses 1-23.
29. One or more baseband processors configured to perform the method of any of clauses 1-23.
30. A method comprising:
   generating, for transmission to a user equipment (UE), a Physical Broadcast Channel (PBCH) comprising a first indication whether Physical Downlink Control Channel (PDCCH) repetitions are configured for System Information Block 1 (SIB1) signaling;
   generating, for transmission to the UE, one or more PDCCHs according to the first indication, wherein the one or more PDCCHs comprise scheduling information for a Physical Downlink Shared Channel (PDSCH) carrying a SIB1;
   generating, for transmission to the UE, the PDSCH carrying the SIB1 according on the scheduling information; and
   at least one of:
      configuring signaling for transmission to the UE according to the SIB1, or
      receiving signaling from the UE according to the SIB1.
31. The method of clause 30, wherein the scheduling information comprises:
   a second indication of a Control Resource Set (CORESET) of each of the one or more PDCCHs carrying the SIB1, and
   a third indication of a Search Space (SS) of each of the one or more PDCCHs carrying the SIB1.
32. The method of clause 30, wherein the first indication is signaled by a bit in a Master Information Block (MIB) of the PBCH.
33. The method of clause 30, wherein the first indication is signaled by a bit in a Physical Layer (PHY) payload of the PBCH.
34. The method of clause 30, wherein the first indication is signaled by two bits in a Physical Layer (PHY) payload of the PBCH, wherein the two bits additionally indicate a number of PDCCH repetitions for SIB1 signaling.
35. The method of clause 34, wherein the two bits additionally indicate at least one of:
   whether a common Control Resource Set (CORESET) is associated with the PDCCH repetitions,
   whether a common Space Search (SS) is associated with the PDCCH repetitions, or
   at least one or a time relationship or a frequency relationship between the PDCCH repetitions.
36. The method of clause 30, wherein the PBCH indicates that PDCCH repetitions are not configured for SIB1, and
   wherein generating the one or more PDCCHs for transmission comprises generating a single PDCCH for transmission, wherein the single PDCCH carries the scheduling information for the PDSCH carrying the SIB1.
37. The method of clause 30, wherein the PBCH indicates that PDCCH repetitions are configured for SIB1, and
   wherein generating the one or more PDCCHs for transmission comprises generating a first PDCCH and a second PDCCH for transmission based on the first indication, wherein each of the first PDCCH and the second PDCCH carries the scheduling information for the PDSCH carrying the SIB1.
38. The method of clause 30, wherein the first PDCCH and the second PDCCH have a common Control Resource Set (CORESET) and different respective Search Spaces, and
   wherein the method further comprises configuring an offset between the Search Spaces of the first PDCCH and the second PDCCH.
39. The method of clause 30, wherein the first PDCCH and the second PDCCH have a common Search Space and different respective Control Resource Sets (CORESETs),
   wherein the method further comprises configuring an offset between the CORESETs of the first PDCCH and the second PDCCH.
40. The method of clause 30, wherein the first PDCCH and the second PDCCH have different respective Search Spaces and different respective Control Resource Sets (CORESETs), and
   wherein the method further comprises at least one of:
   configuring a first offset between the CORESETs of the first PDCCH and the second PDCCH, or
   configuring a second offset between the Search Spaces of the first PDCCH and the second PDCCH.
41. The method of clause 30, further comprising:
   generating, for transmission to the UE, an additional indication whether PDCCH repetitions are configured for signaling at least one of:
      a SIB1 other than the SIB1,
      a Random Access Channel (RACH), or
      a paging message, and
   generating, for transmission to the UE, one or more additional PDCCHs according to the additional indication, wherein the one or more additional PDCCHs comprises scheduling information for an additional PDSCH carrying at least one of:
      the SIB1 other than the SIB1,
      the RACH, or
      the paging message.
42. The method of clause 41, wherein the additional indication comprises an explicit configuration of one or more additional Search Spaces of the one or more additional PDCCHs.
43. The method of clause 41, wherein the one or more additional Search Spaces of the one or more additional PDCCHs are implicitly configured.
44. The method of clause 41, wherein the additional indication is signaled by at least one of:
   the SIB1,
   a Master Information Block (MIB), or
   a PBCH Physical Layer (PHY) payload.
45. The method of clause 30, wherein the method is performed by a base station.
46. The method of clause 30, wherein the method is performed by one or more base band processors.
47. A system comprising one or more computers and one or more storage devices, on which are stored instructions that are operable, when executed by the one or more computers, to cause the one or more computers to perform the method of any of clauses 40-44.
48. A non-transitory computer storage medium encoded with instructions that, when executed by one or more computers, cause the one or more computers to perform the method of any of clauses 30-44.
49. An apparatus comprising processing circuitry configured to perform the method of any of clauses 30-44.
50. One or more baseband processors configured to perform the method of any of clauses 30-44.

## Claims

1. A method comprising:
generating, for transmission to a user equipment (UE), a Physical Broadcast Channel (PBCH) comprising a first indication whether Physical Downlink Control Channel (PDCCH) repetitions are configured for System Information Block 1 (SIB1) signaling;
generating, for transmission to the UE, one or more PDCCHs according to the first indication, wherein the one or more PDCCHs comprise scheduling information for a Physical Downlink Shared Channel (PDSCH) carrying a SIB1;
generating, for transmission to the UE, the PDSCH carrying the SIB1 according on the scheduling information; and
at least one of:
configuring signaling for transmission to the UE according to the SIB1, or
receiving signaling from the UE according to the SIB1.

2. The method of claim 1, wherein the scheduling information comprises:
a second indication of a Control Resource Set (CORESET) of each of the one or more PDCCHs carrying the SIB1, and
a third indication of a Search Space (SS) of each of the one or more PDCCHs carrying the SIB1.

3. The method of claim 1, wherein the first indication is signaled by one of:
a bit in a Master Information Block (MIB) of the PBCH,
a bit in a Physical Layer (PHY) payload of the PBCH, or
two bits in a Physical Layer (PHY) payload of the PBCH, wherein the two bits additionally indicate a number of PDCCH repetitions for SIB1 signaling.

4. The method of claim 3, wherein the two bits additionally indicate at least one of:
whether a common Control Resource Set (CORESET) is associated with the PDCCH repetitions,
whether a common Space Search (SS) is associated with the PDCCH repetitions, or
at least one or a time relationship or a frequency relationship between the PDCCH repetitions.

5. The method of claim 1, wherein the PBCH indicates that PDCCH repetitions are not configured for SIB1, and
wherein generating the one or more PDCCHs for transmission comprises generating a single PDCCH for transmission, wherein the single PDCCH carries the scheduling information for the PDSCH carrying the SIB1.

6. The method of claim 1, wherein the PBCH indicates that PDCCH repetitions are configured for SIB1, and
wherein generating the one or more PDCCHs for transmission comprises generating a first PDCCH and a second PDCCH for transmission based on the first indication, wherein each of the first PDCCH and the second PDCCH carries the scheduling information for the PDSCH carrying the SIB1.

7. The method of claim 1, wherein the first PDCCH and the second PDCCH have a common Control Resource Set (CORESET) and different respective Search Spaces, and
wherein the method further comprises configuring an offset between the Search Spaces of the first PDCCH and the second PDCCH.

8. The method of claim 1, wherein the first PDCCH and the second PDCCH have a common Search Space and different respective Control Resource Sets (CORESETs),
wherein the method further comprises configuring an offset between the CORESETs of the first PDCCH and the second PDCCH.

9. The method of claim 1, wherein the first PDCCH and the second PDCCH have different respective Search Spaces and different respective Control Resource Sets (CORESETs), and
wherein the method further comprises at least one of:
configuring a first offset between the CORESETs of the first PDCCH and the second PDCCH, or
configuring a second offset between the Search Spaces of the first PDCCH and the second PDCCH.

10. The method of claim 1, further comprising:
generating, for transmission to the UE, an additional indication whether PDCCH repetitions are configured for signaling at least one of:
a SIB1 other than the SIB1,
a Random Access Channel (RACH), or
a paging message, and
generating, for transmission to the UE, one or more additional PDCCHs according to the additional indication, wherein the one or more additional PDCCHs comprises scheduling information for an additional PDSCH carrying at least one of:
the SIB1 other than the SIB1,
the RACH, or
the paging message.

11. The method of claim 10, wherein the additional indication comprises an explicit configuration of one or more additional Search Spaces of the one or more additional PDCCHs.

12. The method of claim 10, wherein one or more additional Search Spaces of the one or more additional PDCCHs are implicitly configured.

13. The method of claim 10, wherein the additional indication is signaled by at least one of:
the SIB1,
a Master Information Block (MIB), or
a PBCH Physical Layer (PHY) payload.

14. An apparatus comprising processing circuitry configured to perform the method of any of claims 1-13.

15. One or more baseband processors configured to perform the method of any of claims 1-13.
